(19) Europäisches Patentamt
European Patent Office
Office européen des brevets

(11) **EP 3 715 889 B1**

(12) **EUROPÄISCHE PATENTSCHRIFT**

(45) Veröffentlichungstag und Bekanntmachung des Hinweises auf die Patenterteilung:
**26.07.2023 Patentblatt 2023/30**

(21) Anmeldenummer: **20164329.3**

(22) Anmeldetag: **19.03.2020**

(51) Internationale Patentklassifikation (IPC):
*H01M 10/48* (2006.01)    *H01M 10/42* (2006.01)
*H01M 50/204* (2021.01)    *H01M 50/569* (2021.01)

(52) Gemeinsame Patentklassifikation (CPC):
**H01M 10/482; H01M 10/425; H01M 10/486;**
**H01M 50/204; H01M 50/569;** H01M 2010/4278;
Y02E 60/10

(54) **VERFAHREN ZUR BESTIMMUNG DER KOMPONENTEN UND IHRE ZUORDNUNG IN EINEM ARRAY SOWIE MESSANORDNUNG, IN DER DAS VERFAHREN DURCHFÜHRBAR IST**

METHOD FOR DETERMINING THE COMPONENTS AND THEIR ARRANGEMENT IN AN ARRAY AND MEASURING ARRANGEMENT IN WHICH THE METHOD CAN BE CARRIED OUT

PROCÉDÉ DE DÉTERMINATION DE COMPOSANTS ET LEUR ASSOCIATION DANS UN RÉSEAU AINSI QU'AGENCEMENT DE MESURE DANS LEQUEL LEDIT PROCÉDÉ PEUT ÊTRE MIS EN OEUVRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.03.2019 DE 102019107054**

(43) Veröffentlichungstag der Anmeldung:
**30.09.2020 Patentblatt 2020/40**

(73) Patentinhaber: **RP-Technik GmbH**
**63110 Rodgau (DE)**

(72) Erfinder: **Eichler, Martin**
**61350 Bad Homburg (DE)**

(74) Vertreter: **Cremer & Cremer**
**Patentanwälte**
**St.-Barbara-Straße 16**
**89077 Ulm (DE)**

(56) Entgegenhaltungen:
**EP-B1- 2 770 605**    **US-A1- 2014 365 792**
**US-A1- 2019 033 385**

## Beschreibung

Die vorliegende Erfindung behandelt ein Verfahren, durch das die Anordnung von Komponenten, wie z. B. von Akkumulatoren, in räumlicher und/oder elektrischer bzw. elektrotechnischer Hinsicht bestimmt werden kann.

Des Weiteren behandelt die vorliegende Erfindung eine Messanordnung, die mit Messaufnehmern, insbesondere solchen, die an elektrochemischen Konvertern wie Akkumulatoren angebracht sind, und mit wenigstens einem Messdatensammler aufgebaut einzigartige Erkennungsmerkmale nutzt, um unter räumlichem und/oder elektrotechnischem Blickwinkel die Positionierung der elektrochemischen Konverter, insbesondere der Akkumulatoren, zueinander zu ermitteln.

Mit anderen Worten, die vorliegende Erfindung behandelt ein Verfahren zur Zuordnung von Messaufnehmern nach dem Oberbegriff von Anspruch 1 sowie eine Messanordnung nach dem Oberbegriff von Anspruch 12.

## Technisches Gebiet

Arrays aus elektrochemischen Konvertern, wie z. B. Akkumulatoren-Arrays, werden für zahlreiche Anwendungsfälle aufgebaut, unter anderem als Notstromenergieanlage einer Notlichtbeleuchtungsanlage. Ein weiteres Anwendungsgebiet für ein entsprechendes Akkumulator-Array ist das Gebiet der unterbrechungsfreien Stromversorgung(en), insbesondere in öffentlichen Gebäuden und in Industriebauten. Auch ist bekannt, Akkumulatoren-Arrays als Pufferbatterien in Energieversorgungssystemen mit Photovoltaikkomponenten einzusetzen.

Systeme, die mit besonders robusten und zugleich kostengünstigen elektrochemischen Konvertern, z. B. Akkumulatoren, aufgebaut werden sollen, die idealerweise nach Bedarf, z. B. zum Lebensende jedes einzelnen Akkumulators hin, u. a. aufgrund der Anordnung, der Betriebsweise, der räumlichen Platzierung und der mechanischen Befestigung individuell ausgetauscht werden können, umfassen solche Arrays, d. h. Anordnungen von seriell verschalteten und von parallel verschalteten Akkumulatoren, die mit Akkumulatoren des Typs "Blei-Akkumulator" (wie Blei-Akkumulator mit freier Schwefelsäure, VRLA-Akkumulator, Blei-Gel-Akkumulator und Blei-Glasfaser-Akkumulator) oder des Typs "Metallhydrid-Akkumulator" erstellt sind.

Obwohl die Anordnung, die als Akkumulator-Array bezeichnet wird, als eine zu Strängen zusammengeschlossene, in Serie verschaltete Anordnung von Akkumulatorenpaketen aus Akkumulatoren eines robusten Akkumulatorentyps wie aus Bleiakkumulatoren aufgebaut wird, bei der insbesondere mehrere Stränge parallel angeordnet sind, müssen eine Zentralbatterieanlage als Teil einer Notlichtbeleuchtungsanlage sowie eine Anlage zur unterbrechungsfreien Stromversorgung, damit sie den normativen Anforderungen wie der VDE 0833 entsprechen, mit Mess- und Überwachungselektroniken ausgestattet werden, die Auskunft über die Betriebsfähigkeit, vorzugsweise auch Auskunft über den Zustand der einzelnen Akkumulatorenpakete, geben können.

Entsprechende, in vielen Einsatzgebieten zwischenzeitlich erfolgreich getestete und angewendete Überwachungssysteme sind in der EP 2 770 605 B1 (Patentinhaberin: RP-Technik GmbH; Erteilungstag: 01.02.2017) und in der EP 2 911 269 B1 (Patentinhaberin: RP-Technik GmbH; Erteilungstag: 05.07.2017) beschrieben.

In der Beschreibung dieser beiden Druckschriften sind zahlreiche Informationen und Details zu Akkumulator-Arrays und geeigneten Überwachungssystemen enthalten, wobei die dortigen Systembeschreibungen durch ihre Benennung als Systembeschreibung für vorliegende Erfindung gelten. Statt die Beschreibung einschlägiger Systeme von Akkumulatoren-Arrays mit Überwachungs- und Steuerelektronik erneut zu präsentieren, sei auf die Systembeschreibungen der EP 2 770 605 B1 und der EP 2 911 269 B1 aus Gründen der kompakteren Darstellung verwiesen.

## Stand der Technik

In einigen, bekannten Arrays von Objekten, bei denen die einzelnen Objekte mit einer eigenen Messtechnik ausgestattet sind, werden Zuordnungs- und/oder Berechnungsverfahren eingesetzt, um sicherzustellen, dass die Messsignale oder die Schaltsignale dem richtigen Objekt zugeordnet sind.

In diesem Zusammenhang dürfen die US 8 884 585 B2 (Patentinhaberin: Valence Technology, Inc.; Patenterteilungstag: 11.11.2014) und die US 10 230 246 B2 (Patentinhaberin: Lithium Werks Technology BV; Patenterteilungstag: 12.03.2019) genannt werden, die beide festhalten, dass den einzelnen Batterien einzigartige Adressen zuzuordnen seien, damit ein Managementschaltkreis in der Lage ist, Kontaktierungsschaltkreise der Batterien anzusprechen.

Auch die US 2012/175 953 A1 (Anmelderin: Hitachi, Ltd.; Veröffentlichungstag: 12.07.2012) schlägt vor, mit Adressen in einem Batteriesystem zu operieren. Laut US 2012/175 953 A1 soll zum Zeitpunkt des Starts eines Batteriesystems mit mehreren Batterien und mit mehreren den Batterien zugeordneten Schaltkreisen die Adresszuordnung dadurch erfolgen, dass die Adresse des einen Schaltkreises eindeutig zugeordnet wird und anschließend der Befehl für diese Zuordnung an den nächsten Schaltkreis weitergeleitet wird. Hierdurch findet eine Adresszuordnung Schritt für Schritt gem. der Anzahl an Schaltkreisen statt.

Besonders aufschlussreich ist die Beschreibung der US 9 296 348 B2 (Patentinhaberin: Sanyo Electric Co.,

Ltd.; Patenterteilungstag: 29.03.2016), die zuvor als WO 2012/043 592 A1 veröffentlicht worden ist. Die US 9 296 348 B2 möchte zu einer automatisierten Zuordnung der Adressen zu den funktionalen Modulen dadurch kommen, dass ein Hauptkontroller diese Adresszuordnungen durchführt. Um diese Adresszuordnungen durchführen zu können, gibt es eine Startsignalleitung, die mit den funktionalen Modulen verbunden ist, wodurch eine Aktivierung und Deaktivierung der funktionalen Module durchzuführen sei. Dadurch könne immer ein funktionales Modul mit dem Hauptkontroller verbunden werden. Mit anderen Worten, zur Adressbestimmung der funktionalen Module bedarf es der Ausbildung eines Busses, der zu jedem der funktionalen Module führen muss. Eine solche Lösung dürfte einen erheblichen Verkabelungsaufwand einfordern.

Die JP 2014 041 747 A (Anmelderin: Toshiba Corp.; Offenlegungstag: 06.03.2014) möchte einzelnen Regalböden eines Batterieschranks einen ersten Code und Batterien eine zweite Art Code zuteilen, wobei die zweite Art Code z. B. ein für jede Batterie individualisierter Barcode sein kann, der von einem Lesegerät gelesen werden kann. Bei einem solchen System ist jeder einzelne Aufkleber, z. B. jeder einzelne Barcode-Aufkleber, an den richtigen Stellen anzubringen. Das ganze Arrangement- und Dokumentations-System lebt also davon, dass Code-Etiketten ordnungsgemäß verteilt werden.

Die weiter oben schon angesprochene EP 2 770 605 B1 (Patentinhaberin: RP-Technik GmbH; Veröffentlichungstag des Patents: 01.02.2017) beschreibt eine Energieversorgungseinrichtung mit Batterieüberwachung und ein Batterieüberwachungsverfahren. Jedes von mehreren elektrochemischen Energiespeicherpaketen sollen entweder über jeweils zwei Energieanschlüsse untereinander oder mit einem Energieleitungsanschluss elektrisch verbunden sein. Die Batterieüberwachung weist eine Überwachungselektronik mit einem Empfänger auf. Dazu räumlich separiert angeordnete Messelektroniken dienen jeweils zur Messung einer Messinformation zu einem Zustand des Energiespeicherpakets und haben jeweils eine eigene Messeinrichtung und einen Sender. Wenigstens zwei Energiespeicherpaketen ist jeweils eine eigene Messeinrichtung zugeordnet. Der Empfänger umfasst einen Demodulator, der wiederum an Leitungen angeschlossen ist, die zu dem Energieleitungsanschluss führen. Jeweils eine Messeinrichtung ist nur an jeweils einem Energiespeicherpaket elektrisch angeschlossen. Jede Messelektronik hat weiterhin ihren eigenen Mikrokontroller. Jeder Sender einer Messelektronik weist einen mittels Mikrokontroller steuerbaren Modulator auf. Der Modulator ist mit einem Stromleitungsanschluss elektrisch verbunden und umfasst eine Einheit für die Durchführung eines Aufmodulierens eines Signals auf den Energieleitungsanschluss. In dem Signal wird eine von der Messelektronik ermittelte Information hineinkodiert. Das Signal ist über den Energieleitungsanschluss übertragbar. Der Demodulator ist in weiterer Folge des Signalflusses für einen Empfang des Signals gestaltet, sodass der Empfänger die Information empfangen und dekodieren kann. Die Messelektronik bestimmt den Zustand des Energiespeicherpakets anhand einer gemessenen Spannung, indem diese mit einer Nominalspannung und einer Tiefentladungsschwelle verglichen wird. In Phasen erhöhter Belastung des Energiespeicherpakets wird ein Senden von Datenpaketen reduziert. Im Falle einer Tiefentladung des Energiespeicherpakets wird das Senden von Datenpaketen idealerweise unterbrochen.

Aus der US 2014/365 792 A1 (Anmelderin: Samsung SDI CO., LTD.; Veröffentlichungstag: 11.12.2014) - auch veröffentlicht als EP 2 840 643 A1 (Veröffentlichungstag: 25.02.2015) - geht ein Batteriemanagementsystem und ein Verfahren zu dessen Steuerung hervor. Das Verfahren soll mit einer Vielzahl von Slave-Steuerungen, die sequentiell verbunden sein sollen, und mit einer Mastersteuerung arbeiten. Die Master-Steuerung überträgt ein Steuersignal an eine erste Slave-Steuerung der vielen miteinander verbundenen Slave-Steuerungen durch ein Steuersignalübertragungsmittel. Jede Slave-Steuerung der vielen Slave-Steuerungen empfängt das Steuersignal, wobei die Slave-Steuerung unter Verwendung des Steuersignals aktiviert oder mit Strom versorgt wird. Ein Aktivieren eines jeweiligen Ansteuerungszeitzählers als Reaktion auf das Steuersignal und ein Ausgeben des Steuersignals nach einer Verzögerung erfolgen an eine nachfolgende Slave-Steuerung in der Kette der Slave-Steuerungen. Das Steuersignal soll dann sequentiell an jeder Slave-Steuerung ankommen. Dabei löst die Master-Steuerung das Übertragen eines Slave-Steuerungskennung-Zuordnungsbefehls aus, das an jede Slave-Steuerung in der Kette der Slave-Steuerungen gleichzeitig über das Kommunikationssignal-Übertragungsmittel geschickt wird. In jeder Slave-Steuerung wird ein Ansteuerungszeitzähler-Wert des jeweiligen Ansteuerungszeitzählers als Reaktion auf den Slave-Steuerungskennung-Zuordnungsbefehl gespeichert. Dieser Ansteuerungszeitzähler-Wert wird an alle anderen Slave-Steuerungen übertragen. In jeder Slave-Steuerung wird der gespeicherte Ansteuerungszeitzähler-Wert mit mindestens einem anderen Ansteuerungszeitzähler-Wert, der von einer anderen Slave-Steuerung empfangen wird, verglichen. In jeder Slave-Steuerung der Vielzahl von Slave-Steuerungen soll außerdem ein Einstellen einer Slave-Steuerungskennung erfolgen, die auf den verglichenen Ansteuerungszeitzähler-Werten basiert.

Außerdem gehen auch allgemein bekannte Zusammenhänge und Abhängigkeiten, insbesondere physikalische Rahmenbedingungen, von Akkumulatoren aus jenen Druckschriften hervor.

## Aufgabenstellung

Obwohl die oben bezeichneten beiden Druckschriften des Europäischen Patentamts (EP 2 770 605 B1 und EP 2 911 269 B1) sehr ausgereifte Systeme beschreiben, hat es sich gezeigt, dass es tatsächlich, insbesondere im Anwendungsgebiet der unterbrechungsfreien Stromversorgung(en), immer wieder Zuordnungsprobleme gibt.

Ein Array, z. B. aus Blei-Akkumulatoren, wird zwar anfänglich ordnungsgemäß mit seiner Messelektronik bestückt, jedoch ist ein Zuordnungsrisiko u. a. Zuordnungsrisiken dadurch gegeben, dass die Akkumulatoren ungleichmäßig altern, sodass im weiteren Betrieb nur einzelne der Akkumulatoren auszutauschen sind, während die übrigen Akkumulatoren unverändert weiter betrieben werden können. Findet dann keine Korrektur bzw. Adaption bei den Zuordnungen der Messelektroniken zu den Akkumulatoren statt, so speichert eine zentral angeordnete Überwachungselektronik plötzlich, bei genauerer Analyse seit der letzten Wartung mit Austausch einzelner Akkumulatoren, Datensätze zu einem Array, das tatsächlich anders ausschaut als durch die Messtechnik dokumentiert oder beschrieben ist. Das kann im Extremfall dazu führen, dass keine zuverlässige, vollumfassende Überwachung mehr durchführbar ist.

Vorteilhaft wäre es also, wenn eine Zuordnung, z. B. als letzter Schritt bei einer Wartung eines Arrays von z. B. Akkumulatoren, möglichst zuverlässig, quasi automatisiert, erfolgen kann, wobei solche Messtechnikschritte möglichst fehlerunanfällig vonstattengehen sollten. Die nach einer Wartung durchgeführten Messungen sollten dem untersuchten Array entsprechen und nicht mit fehlerhaften Messdaten einer überholten Array-Fassung anhängen.

## Erfindungsbeschreibung

Das erfindungsgemäße Verfahren zur Herstellung einer zutreffenden Zuordnung erfolgt durch eine Messsteuerung nach Patentanspruch 1. Vorteilhafte Weiterbildungen sind den Ansprüchen 2 bis 11 zu entnehmen.

Eine erfindungsgemäße Messanordnung erfolgt durch eine Messanordnung nach Patentanspruch 12. Vorteilhafte Weiterbildungen sind den Ansprüchen 13 und 14 zu entnehmen.

Das erfindungsgemäße Verfahren lässt sich sowohl bei Messdatensammlern einsetzen, die noch keine Zuordnungstabelle haben, als auch bei Messdatensammlern, die zwar über Daten zur räumlichen und/oder elektrischen Anordnung der Objekte verfügen, diese aber, aus welchem Grund auch immer, nicht (mehr) zutreffend sind. In all diesen Situationen ist es wünschenswert, dass mit Hilfe eines Verfahrens eine Zuordnung von Messaufnehmern zu zu messenden Objekten, wie elektrochemischen Konvertern, genauer gesagt Akkumulatoren, durchführbar ist. Hierbei kann die Zuordnung unter verschiedenen Blickwinkeln durchgeführt werden. Ist die Zuordnung immer einheitlich und gleich, kann eine Vereinfachung der Zuordnung herbeigeführt werden. Liegen veraltete, nicht mehr zutreffende oder ungenaue Daten vor, so ist es wünschenswert, die Zuordnung richtig zu stellen. Auch kann es erforderlich werden, dass die Zuordnung, z. B. aufgrund von vorgenommenen Änderungen, an die dann gegebene Situation angepasst und/oder adaptiert werden muss.

Wie ein Array aus gleichartigen Objekten konkret arrangiert ist, lässt sich gut in einer Zuordnungstabelle wie z. B. einer Matrix festhalten.

Messaufnehmer können in unterschiedlicher Ausgestaltung realisiert sein. In einer Ausgestaltung können die Messaufnehmer als Überwachungsbausteine realisiert sein. In einer anderen Ausgestaltung können die Messaufnehmer als die eigentlichen Messvorrichtungen der elektrochemischen Konverter des Arrays gestaltet sein. Werden als elektrochemische Konverter Akkumulatoren benutzt, so können die Messaufnehmer Akkumulatorenüberwachungsbausteine oder auch Akkumulatorenmessvorrichtungen sein.

Ein besonders umfassendes Bild über den Zustand des gesamten Arrays ergibt sich, wenn jedem einzelnen Akkumulator eine Messelektronik zugeordnet ist.

Je nach Objekt stehen unterschiedliche Messgrößen und Parameter zur Verfügung. Bei Akkumulatoren können eine ganze Anzahl an Parametern gemessen werden.

Soll die Anzahl der zu messenden Parameter reduziert werden oder ist das Array mit wirklich gut "gematchten" Akkumulatoren realisiert, so mag es ausreichen, wenn nicht jeder einzelne Akkumulator anhand seiner zu messenden Parameter überwacht wird, sondern jeweils immer nur eine Gruppe von Akkumulatoren, also zu einer Gruppe zusammengefasste Akkumulatoren von einem Messaufnehmer wie einem Überwachungsbaustein kontrolliert wird.

Die elektrochemischen Konverter, wie z. B. die Akkumulatoren, können zu einem Array zusammengeschlossen sein. In einem Array sind üblicherweise eine gewisse Anzahl Akkumulatoren in Serie verschaltet und eine gewisse Anzahl an in Serie verschalteten, zu Gruppen zusammengeschlossene Akkumulatoren jeweils parallel zu weiteren Gruppen verschaltet. In solchen Arrays gibt es mehrere zu messende Objekte (Brennstoffzellen, Akkumulatoren, Starter-Batterien, Super-Caps, Energiespeicher usw.); es kann auch gesagt werden, mehrere zu messende Objekte sind Teil des Arrays.

Für eine möglichst handhabbare Variante der Überwachung bietet es sich an, die Daten der einzelnen Messvorrichtungen bzw. Messaufnehmer an einer zentralisierten Stelle zusammenzuführen. Als zentralisierte Stellen eignen sich zentral angeordnete Messdatensammler, ein zentral platzierter Empfänger, eine Zentrale oder ein als übergeordneter Steuerungsrechner platzierter Knoten.

Wie eingangs schon angesprochen, ist es eines der Ziele des Verfahrens, das tatsächliche Arrangement der Akkumulatoren bzw. - allgemeiner gesprochen - der elektrochemischen Konverter abzubilden. Diese Bestimmung des Arrangements kann anhand der Messaufnehmer erfolgen, insbesondere bei solchen Arrangements, bei denen jedem elektrochemischem Konverter, z. B. jedem Akkumulator, ein eigener Messaufnehmer zugeordnet ist, z. B. jeweils ein Messaufnehmer an je einem Akkumulator fest verbunden angebracht ist. Ist in einem solchen Fall bekannt, wie die Messaufnehmer verteilt angeordnet sind, so kann von dem Arrangement der Messaufnehmer auf das Arrangement der elektrochemischen Konverter bzw. der Akkumulatoren zurückgeschlossen werden.

Als geeignete Messverfahren für die Bestimmung des Arrangements der elektrochemischen Konverter, insbesondere anhand der Messaufnehmer, stehen verschiedene Messverfahren zur Verfügung, zwischen denen ausgewählt werden kann. Soll ein besonders zuverlässiges Messverfahren durchgeführt werden, so kann auch eine Kombination der einzelnen Messverfahren zu einem kombinierten (Gesamt-)Messverfahren durchgeführt werden.

Wie gesagt, das Array hat einzelne Stränge, in denen elektrochemische Konverter in Serie verschaltet sind. Ist die Messung so durchzuführen, dass jeweils ein Strang nach und nach zuschaltbar ist, entweder in dem Zustand, in dem alle übrigen Stränge weggeschaltet sind, oder in dem Zustand, in dem eine gewisse Anzahl an Strängen vorher eingeschaltet wurde und als stabilisiert betrachtet werden, kann eine strangweise Analyse des Arrays durchgeführt werden. Üblicherweise sind in jedem Strang genau so viele elektrochemische Konverter vorhanden wie in den benachbarten oder sogar in allen übrigen Strängen. Das bedeutet, dass alle Stränge mit der gleichen Anzahl an Objekten aufgebaut sein können.

Unterschiedliche Messverfahren können eingesetzt werden, um die einzelnen Messaufnehmer und damit den jeweiligen Messaufnehmern zugeordnete elektrochemische Konverter, genauer Akkumulatoren, strangweise und/oder positionsweise, vorzugsweise innerhalb eines Strangs, zu bestimmen oder zu ermitteln.

Als Parameter bietet sich an, dass die Gesamtspannung jedes einzelnen Akkumulators, seine Temperatur, der aus dem Akkumulator gezogene Strom sowie Parameter über den Gesundheitszustand des Akkumulators gemessen werden. Der Gesundheitszustand eines Akkumulators kann u. a. anhand von Konzentrationen, wie z. B. der Konzentration der im Akkumulator vorhandenen Schwefelsäure, gemessen werden. Eine andere Größe, die etwas über den Gesundheitszustand des Akkumulators aussagt, ist ein Innenwiderstand des Akkumulators.

Eines der einsetzbaren Messverfahren basiert auf der Messung von Startzeiten eines jeden Messaufnehmers.

Damit möglichst wenige Kollisionen bei der Datenübertragung zu einem Array aus Objekten auftreten, wird gemäß einer Ausgestaltung einer vorteilhaften Messanordnung der Sendezeitpunkt von Messdaten einer Messvorrichtung oder eines Messaufnehmers durch einen Satz Daten festgelegt, in die z. B. auch eine Seriennummer des Messaufnehmers einfließen kann. Durch Vergabe von Seriennummern, die nur ein einziges Mal vergeben werden, lässt sich durch Errechnen der jeweils geeigneten Startzeiten zur Übertragung von Messdaten in jedem Messaufnehmer ein Startzeitpunkt festlegen, der von möglichst wenigen anderen Messaufnehmern bemüht bzw. benutzt oder okkupiert wird.

Werden außerdem Signallaufzeiten über in einem Strang vorhandene elektrochemische Konverter berücksichtigt, so kann anhand der - insbesondere durch Zurückrechnen - ermittelten Startzeit der Übertragung der Messdaten (zu jedem Messaufnehmer individuell) und der Dauer bis zum Empfang der Messdaten ein Rückschluss auf die genauere Positionierung innerhalb eines Strangs gebildet werden.

Ein ähnlich gestaltetes Messverfahren basiert auf der Bestimmung der Empfangszeitpunkte aller in einem Strang vorhandener Messaufnehmer bzw. ihrer Datenübertragungen. Hierbei wird wiederum berücksichtigt, dass in einem Strang entfernter positionierte Messaufnehmer längere Signallaufzeiten benötigen als näher zum Messdatensammler positionierte Messaufnehmer.

Außerdem steht - nach einer weiteren Ausführungsvariante - die jeweilige Seriennummer in jedem Messaufnehmer zur Verfügung. Das bedeutet, dass aus dem Empfang der unterschiedlichen Seriennummern Rückschlüsse auf die Position im Array gezogen werden kann.

Wenn es sich um ein Array von Objekten handelt, z. B. um ein Array von Akkumulatoren, so sind einige dieser Akkumulatoren, z. B. aufgrund ihrer Verschaltungen, in Serie und Gruppen von Akkumulatoren wiederum parallel zueinander platziert, was zumindest ein zweidimensionales Feld darstellt. Für einen Fachmann verständlich ist es, dass auch höher dimensionale Felder als Arrangementwiedergabe der Objekte genutzt werden dürfen.

Die empfangenen Messdaten können insoweit extrahiert, aufbereitet und gegebenenfalls reduziert werden, dass aus diesen Messdaten ein zweidimensionales Feld mit Daten und Informationen zur Anordnung oder zur elektrischen Verschaltung der zu messenden Objekte als Abbildung aller zu messenden Objekte angelegt wird.

Obwohl anfänglich nicht vollständig bekannt sein muss, an welcher Stelle welcher Akkumulator und somit welcher Messaufnehmer im Array platziert worden ist, insbesondere in den Fällen, in denen jeder Akkumulator mit einem eigenen, mit ihm fest verbundenen, vorzugsweise als ein Bauteil ausgestalteter elektrochemischer Konverter realisiert ist, schafft das - idealerweise auf mehrere Messverfahren zurückgreifende - Allozierungsverfahren ein vertraubares Abbild der Messaufnehmer bzw. der Messsensorenanordnung.

Unter einem weiteren Blickwinkel kann die vorliegende Erfindung auch wie folgt beschrieben werden.

Mit Hilfe des auf einem Array anwendbaren Verfahrens kann eine Abbildung der Anordnung der elektrochemischen Konverter geschaffen werden, indem ihre Reihenfolge, d. h. wie sie aufeinander folgen, und wie sie untereinander zusammengeschlossen sind, messtechnisch ermittelt und archiviert wird. Das Messverfahren lässt sich besonders gut bei üblichen Akkumulatoren, wie Bleiakkumulatoren, anwenden. Hierbei wird jedem einzelnen elektrochemischen Konverter ein ihn auszeichnendes Erkennungsmerkmal zugeordnet, wie z. B. eine eindeutige, insbesondere niemals wieder sonst wie vergebene, Seriennummer. Damit ergibt sich aus der Anordnung von elektrochemischen Konvertern eine Aufeinanderfolge von einzigartigen Erkennungsmerkmalen.

Neben der Nutzung von Seriennummern als Erkennungsmerkmale gibt es weitere Kriterien, die, werden sie richtig eingesetzt, ebenfalls zu einzigartigen Erkennungsmerkmalen führen können. Aus Datenempfangszeitpunkten oder Datenempfangszeiträumen lassen sich Erkennungsmerkmale ableiten. Genauso können Datensendezeitpunkte oder gar Datensendezeiträume als Grundlage für Erkennungsmerkmale herangezogen werden. Sind die elektrochemischen Konverter mit einer Elektronik ausgestattet, die, gegebenenfalls auch in Kombination, Datenübertragungen mit Datenempfangszeitpunkten, Datenempfangszeiträumen, Datensendezeitpunkten oder Datensendezeiträumen nach gewissen Kriterien abwickeln, lassen sich aus den übertragenen Messdatenkriterien (eine) Identifikation(en) der elektrochemischen Konverter und/oder ihrer Messaufnehmer ableiten.

So ist es z. B. möglich, die Datenlaufzeiten mit den Datensendezeitpunkten zu korrelieren, um aus den zurückgelegten Strecken und der Dauer der Übertragung der Signale Rückschlüsse auf die Position der elektrochemischen Konverter im Array zu ziehen bzw. zu bilden.

Ist das Array mit elektrochemischen Konvertern so arrangiert, dass es mehrere Stränge mit jeweils einer gewissen Anzahl, z. B. einer gleichen Anzahl, elektrochemischer Konverter aufweist (z. B. je 20, 40 oder 80 Konverter in Serie), so gibt es mehrere elektrochemische Konverter, die (elektrotechnisch gesehen) gleichweit von einem Messdatensammler entfernt platziert sind. Um aufgrund der gleichartigen Strangaufbauten im Array keine Fehler bei der Erstellung einer Abbildung der Aufeinanderfolge der elektrochemischen Konverter zu erzeugen, ist es vorteilhaft, wenn strangweise das Abarbeiten und Erstellen der Abbildung durchgeführt wird. Hierfür kann jeder Strang des Arrays mit einem (einzigen) eigenen, in einer alternativen Ausführung jeweils am Ende des Strangs und am Anfang des Strangs mit einem eigenen, Schalter ausgestattet sein. Von diesen Strängen wird ein Erkennungsmerkmal für jeden in diesem Strang vorhandenen elektrochemischen Konverter, z. B. im Rahmen der vom elektrochemischen Konverter durchgeführten Messung, an einen Empfänger, genauer an den Messdatensammler übertragen.

Unter einem dritten Blickwinkel kann die vorliegende Erfindung auch wie folgt beschrieben werden.

Eine Messanordnung für einen Array mit elektrochemischen Konvertern, z. B. mit Akkumulatoren, lässt sich häufig als serielle Anordnung von mehreren jeweils zu Strängen zusammengefassten elektrochemischen Konvertern betrachten. Die Stränge sind untereinander parallel verschaltet. Innerhalb eines Strangs sind mehrere elektrochemische Konverter, z. B. die Akkumulatoren, in Serie verschaltet.

Wird ein elektrochemischer Konverter mit seinen eigenen Messaufnehmern ausgestattet, in einer alternativen Ausgestaltung kann auch ein Messaufnehmer für mehrere elektrochemische Konverter zuständig sein, so kann ein Messverfahren durchgeführt werden, mit dessen Hilfe ein Zustand des einen oder der mehreren zugeordneten elektrochemischen Konverter ermittelt werden kann. Werden die Messaufnehmer so betrieben, dass sie nicht nur die Messdaten des jeweiligen elektrochemischen Konverters messen und gegebenenfalls an eine zentrale Stelle, wie an einen Messdatensammler, übertragen können, sondern statten die Messaufnehmer ihre Daten mit einem einzigartigen Erkennungsmerkmal aus, so kann jeder Messaufnehmer, z. B. aufgrund der von ihm verwendeten und mitübertragenen Seriennummer, die Eindeutigkeit, insbesondere die Einzigartigkeit, seiner Messdaten markieren. Andere Möglichkeiten, wie aus normalen Messdaten einzigartige Messdaten aufgrund von nur einmal vergebenen Zusatzinformationen werden können, sind weiter oben angesprochen.

Jeder Messaufnehmer hat zumindest ein Erkennungsmerkmal, das ihn einzigartig macht und, sofern dieses Erkennungsmerkmal auch mit den Messdaten übertragen wird, wodurch die Messdaten einzigartig werden. Selbst wenn mehrere elektrochemische Konverter vollkommen identische Messdaten liefern, lassen sich die Messdaten anhand des Erkennungsmerkmals voneinander unterscheiden.

Sollen Kollisionen auf den Kommunikationskanälen, z. B. auf den Energieversorgungsleitungen, möglichst unterbunden werden, hilft es, wenn die Übertragung der Messsignale zu unterschiedlichen Zeitpunkten stattfindet. Die Bestimmung des Zeitpunktes zur Übertragung der Messsignale an einen zentralen Messdatensammler kann mit Hilfe des Erkennungsmerkmals des Messaufnehmers zumindest beeinflusst, wenn nicht sogar dadurch eindeutig bestimmt werden. Wird anhand der Seriennummer ein "time-multiplexing" durchgeführt, so ergeben sich unterschiedliche Übertragungszeiten aus unterschiedlichen Seriennummern.

In dem, vorzugsweise zentral angeordneten, Messdatensammler sollte ein Speicher vorhanden sein, in den die empfangenen Messdaten eingeschrieben werden können. Aus den Messdaten können Positionsangaben, insbesondere zu jedem einzelnen Strang und zu den in ihm vorhandenen Messaufnehmern, extrahiert werden.

Eine solche Messanordnung, die vorrangig den Zustand möglichst vieler elektrochemischer Konverter im Array misst, kann zusätzlich dazu verwendet werden, Positionsangaben, Verschaltungsangaben oder Relativbezüge zwischen den elektrochemischen Konvertern aus der Messdatenübertragung abzuleiten.

Vorteilhafterweise überträgt die Messanordnung nicht nur zwischen ihren Komponenten Daten zum Gesundheitszustand der einzelnen Akkumulatoren oder den sonstigen elektrochemischen Konvertern, sondern die Messanordnung ist zugleich so ausgestaltet, dass sie die Position der Akkumulatoren im Array bzw. der elektrochemischen Konverter im Array bestimmen kann.

Eine Eingabemaske hat einen matrixartigen Bereich bzw. eine Matrix-Struktur, der bzw. die einem Array nachgebildet ist und in der Spalten mit Spaltentiteln existieren. Außerdem gibt es eine Struktur bzw. einen Bereich mit Feldern, die in Gestalt von Bedienknöpfen in Gestalt von Automatisierungsschaltern sowie in Gestalt wenigstens eines Eingabeschalters vorliegen. Diese Felder in Gestalt von Bedienknöpfen, Automatisierungsschalter, d. h. erster Automatisierungsschalter und zweiter Automatisierungsschalter, und Eingabeschalter dienen zur Eingabe von weiteren Parametern, Angaben und Daten für die Messanordnung.

Nachfolgend werden vorteilhafte Ausgestaltungen und Weiterbildungen dargelegt, die für sich gesehen, sowohl einzeln als auch in Kombination, ebenfalls erfinderische Aspekte offenbaren können.

Besonders störungsarm ist die Erstellung der Abbildung dann, wenn alle übrigen Stränge ausgeschaltet sind und nur ein einziger Strang jeweils aufgeschaltet wird. Bei einem solchen Vorgehen wird ein Strang nach dem anderen jeweils eine kurze Zeit zur Bestimmung der in ihm vorhandenen elektrochemischen Konverter aktiviert, d. h. aktiv geschaltet.

In einer alternativen Ausgestaltung ist es auch möglich, wiederum einen einzigen Strang zu einem bestimmten Zeitpunkt hinzuzuschalten. Die zuvor eingeschalteten Stränge bleiben aber aktiv. Treten nahezu identische Signale bezüglich Positionsangabe zweier oder sogar mehrerer elektrochemischer Konverter auf, so kann, weil die zuerst eingeschalteten Stränge mit ihren elektrochemischen Konvertern zuvor ermittelt worden sind, diese als länger vorliegende elektrochemische Konverter aussortiert werden. Es verbleiben die elektrochemischen Konverter, die zum Schluss aufgeschaltet worden sind, bzw. der zum Schluss aufgeschaltete Strang mit seinen elektrochemischen Konvertern.

In einem solchen Verfahren kann reihum ein Strang nach dem nächsten durchgeschaltet werden, bis alle Stränge entweder einmal ein- und ausgeschaltet worden sind oder bis alle Stränge im Ergebnis eingeschaltet worden sind.

Unter einem vierten Blickwinkel kann die Zuordnung von Messaufnehmern zu elektrochemischen Konvertern auf Einschaltzeitpunkte gestützt werden, die (nachträglich) geschätzt werden. Hierbei kann der (rückblickend geschätzte) Startzeitpunkt ermittelt werden. Es wird der Zeitpunkt geschätzt, zu dem ein einzelner Messaufnehmer, der umgangssprachlich auch vereinfachend als Sensor bezeichnet werden kann (denn er misst wenigstens einen Messwert wie elektrische Spannung, elektrischen Strom, elektrischen Innenwiderstand, elektrische Kapazität, Temperatur, aufgeprägte Frequenzen oder dergleichen), an "seinen" elektrochemischen Konverter, wie z. B. an seine Batterie, (vor einer gewissen Zeit) angeschlossen worden ist. Es wird mit denjenigen Daten gearbeitet, die aussagen, wann ein Aufschalten auf dem jeweiligen elektrochemischen Konverter erfolgte. Dieser "Startzeitpunkt" wird von der Empfänger-Software, d. h. von der Steuerung in dem Messdatensammler, typischerweise zu einem Zeitpunkt geschätzt, der später liegt, beispielsweise einige Stunden, nachdem der Messaufnehmer angeschlossen wurde.

Vorteilhafterweise erfolgt diese Schätzung (im Sinne einer "Extrapolation") aus den empfangenen Messdaten selbst heraus. Die Messdaten eines Messaufnehmers werden günstigerweise paketweise übertragen. Ein solcher Zusammenschluss von Messdaten kann auch als Messdatenpaket bezeichnet werden. Mit anderen Worten, die in den einzelnen Messaufnehmern gesammelten Messdaten werden an den Messdatensammler, bzw. an die zentralisiert angeordnete Messaufnahme, übertragen. Hierbei wird zu unterschiedlichen Zeitpunkten jeweils ein Messdatenpaket eines Messaufnehmers übertragen.

Nun ist es möglich, dass jedes Messdatenpaket eine Nummer erhält. Daraufhin enthält das Messdatenpaket auch noch diese Nummer. Nach einer anwendbaren Ordnungsvorschrift bzw. Ordnungsreihenfolge werden den Messdatenpaketen bzw. den Messungen, vorzugsweise bereits mit der ersten Messung beginnend, z. B. von Null aus startend, ansteigend, z. B. jeweils um "1" inkrementiert, Nummern zugeordnet. Die Messdatenpakete werden durchnummeriert. Die Messungen erhalten Nummern. Jede Messung hat ihre eigene Nummer. Je später die Messung stattgefunden hat, desto höher kann die zugewiesene Nummer sein, z. B. von Messung zu Messung jeweils um "1" erhöht.

Wird berücksichtigt, dass der Startzeitpunkt des Messaufnehmers dem Zeitpunkt entspricht, zu dem jene Messung stattfand, die z. B. mit der niedrigsten Ordnungsnummer, eine solche Nummer kann die Nummer "0" sein, bezeichnet wurde, so kann anhand eines Zeitpunkts eines Empfangs (z. B. abgekürzt durch "t") und die im Datenpaket enthaltene Messungsnummer (z. B. abgekürzt durch "n") eine Zuordnung des Messdatenpakets festgehalten werden. Ein Zuordnungsobjekt kann z. B. mit den beiden Werten "Zeit" und "Nummer" ("t", "n") versehen werden. Das Messdatenpaket ist um die beiden Werte "Zeit" und "Nummer" erweitert.

Werden in dem Messdatensammler zwei Datenpakete empfangen, die von ein und demselben Messaufnehmer stammen, so können die Datenpakete z. B. als "(t, n)" und "(t', n')" bezeichnet werden. Auf Basis der Datenpakete kann daraus ein mittleres Messintervall "DT" bestimmt werden. Formelmäßig lässt sich dies z. B. durch

$$DT = \frac{(t' - t)}{(n' - n)}$$

ausdrücken.

Aufgrund von regelmäßig durchgeführten Messzyklen, die z. B. durch einen im Messaufnehmer laufenden internen Zeitgeber gesteuert werden, kann ein Messintervall als zu allen Zeitpunkten konstant angesehen werden. Diese Annahme ist zwar ggf. nicht zu allen Betriebszuständen und in allen Betriebsumgebungen, d. h. nicht immer, vollständig zutreffend (beispielhaft sei erwähnt, dass zusätzlich Temperatureinflüsse auf den Zeitgeber berücksichtigt werden können), aber unter Zugrundelegung eines mittleren Werts über der Zeit ist eine Dauer von einem Messzyklus zu einem nächsten Messzyklus als konstant ansehbar. Ist also (ggf. auch nur vereinfachend) von einer konstanten Zeitbasis auszugehen, so kann der Startzeitpunkt der Inbetriebnahme des Messaufnehmers und damit sämtlicher durchgeführter Messungen als Zeitpunkt $t_0$ der Messungen angesehen werden. Der Zeitpunkt $t_0$ kann mit der Messung Nr. 0 ($n = 0$) gleichgesetzt werden. Daraus lässt sich mit folgender Formel eine Beziehung zwischen letzter bzw. aktueller Messung und der aller ersten Messung ableiten:

$$t_0 = t - n * DT,$$

wobei $(t, n)$ eines der beiden Datenpakete repräsentiert (siehe oben). Die Annahme, dass ein zwischen zwei Messungen gegebenes Messintervall konstant ist und alle Messintervalle zueinander konstant bleiben, ist eine Näherung. Wie bereits angesprochen, wirkt sich die Umgebungstemperatur auf eine Zeitsteuerung aus. Ein Einflussfaktor ist zumindest in einer Temperaturabhängigkeit gegeben. Soll der Zeitpunkt $t_0$ möglichst fehlerfrei bestimmt werden, kann die Schätzung, wann genau der Zeitpunkt $t_0$ stattgefunden hat, auf eine Phase innerhalb der ersten Stunden nach (Erst-)Inbetriebnahme des Messaufnehmers begrenzt werden.

Der Zuordnungsalgorithmus kann derart gestaltet sein, dass er aus mehreren zur Verfügung stehenden Berechnungsverfahren eine Kombination aus diesen verschiedenen Berechnungsverfahren auswählt. In einem solchen Fall benutzt der Zuordnungsalgorithmus mehrere Berechnungsverfahren. Wird die Zuordnung innerhalb der ersten Stunden nach (Erst-)Inbetriebnahme eines Arrays von Objekten durchgeführt, kann z. B. eine Ermittlung der Konverterpositionen, wobei die Konverter in einer vorteilhaften, besonders geschützten Platzierung in einem Batterieschrank angeordnet sind, und eine Zuordnung auf den Inbetriebnahmevorgängen und auf der Dauer der Betriebsphasen jedes einzelnen Messaufnehmers fußen. Es werden die Zeitpunkte ermittelt, zu denen die einzelnen Messaufnehmer eingeschaltet worden sind bzw. ab wann, also ab welchem Zeitpunkt, ihr Betrieb stattgefunden hat. Es kann auch gesagt werden, es sind die Zeitpunkte zu ermitteln, zu denen die erste Inbetriebnahme stattgefunden hat. Je kürzer die Phase des Betriebs ist, desto näher liegt das zuletzt übertragene Datenpaket noch zu dem ersten Datenpaket. Der zeitliche Unterschied $\Delta t$ ist gering bzw. klein (z. B. nur wenige Minuten).

Auf der anderen Seite gilt aber auch, dass eine längere Messperiode bzw. eine größere Anzahl Messzyklen zur Verbesserung des Messergebnisses beitragen können. Je mehr Zeit (bzw. je mehr Messungen) zwischen den für die Schätzung verwendeten zwei Datenpaketen $(t, n)$ und $(t', n')$ liegt (liegen), desto kleiner wird die rechnerische Ungenauigkeit von $t_0$. Der zeitliche Abstand lässt sich wie folgt beschreiben:

$$\Delta t_0 \;=\; \Delta t \,*\, \left(1 + 2 * \left|\frac{n'}{n'-n}\right|\right),$$

wobei $\Delta t$ die Ungenauigkeit bei der Bestimmung (Messung) von $t$ und $t'$ ist. Die Ungenauigkeit $\Delta t$ liegt typischerweise in der Größenordnung der Messauflösung von einigen Millisekunden; mit wachsendem Abstand zwischen den beiden betrachteten Datenpaketen strebt die Ungenauigkeit von $\Delta t_0$ gegen $\Delta t$.

Unter noch einem weiteren Blickwinkel lässt sich ein geeignetes Zuordnungsverfahren auch wie folgt beschreiben.

Der elektrische Strom in einem Strang unterscheidet sich von dem Strom in einem anderen Strang eines Arrays aufgrund der Innenwiderstände der elektrochemischen Konverter (den "Objekten"), die den Strang ausmachen bzw. bilden. Obwohl sich an den Energieleitungsanschlüssen die gleiche Spannung einstellt, weicht der Strom von Strang zu Strang ab, wenn der pro Strang zu bildende summarische Innenwiderstand aller elektrochemischer Konverter von Strang zu Strang unterschiedlich ist. Anhand von Strommessungen können Bestimmungen durchgeführt werden, in welchem Strang ein einzelner Messaufnehmer angeordnet ist bzw. von welchem Strang der Messaufnehmer ein Teil ist.

Wird neben den Strangstrommessungen unter Berücksichtigung der Innenwiderstände der elektrochemischen Konverter auch noch die relative Spannung eines elektrochemischen Konverters in Bezug auf ein Nullpotential gemessen, so kann ermittelt werden, an welcher Stelle im Strang der jeweilige Messaufnehmer sitzt. Auch bei den Potentialmessungen kann wiederum der Innenwiderstand jedes elektrochemischen Konverters berücksichtigt werden.

Nach einem weiteren Messverfahren können Signallaufzeiten zwischen Messaufnehmer und Messdatensammler gemessen werden und zur Berechnung eines Zuordnungsalgorithmusses verwendet werden. Ein solches Verfahren basiert auf kurzen Zeitdauermessungen.

Wie bereits zuvor angeklungen, ist es besonders vorteilhaft, wenn die Messung der einzelnen Objekte strangweise erfolgt. Dies kann dadurch realisiert werden, dass die Objekte strangweise hinzugeschaltet werden. Als Objekt des Strangs kann das Array z. B. aus elektrochemischen Konvertern aufgebaut sein, zwischen denen Kabel oder sonstige elektrisch leitende Verbindungen, wie Leiterbahnen, vorhanden sind.

Wie ebenfalls zuvor schon angeklungen, können verschiedene Messverfahren verwendet werden, um Erkennungsmerkmale zu den elektrochemischen Konvertern und ihren Messaufnehmern zu bestimmen.

Zum einen ist die Startzeit eine verwendbare Größe, insbesondere wenn die Startzeit eines Messaufnehmers nach seinem Einschalten von Kriterien, wie dem relativen und dem absoluten Spannungsniveau und/oder einer relativen Bezugsgröße wie einer Seriennummer, abhängt. Als Alternative bieten sich auch Messungen von Empfangszeitpunkten einzelner Quellen, insbesondere einzelner Akkumulatoren, des Strangs an.

Natürlich kann auch auf die Seriennummern, die arrayweise oder strangweise ermittelt werden, zurückgegriffen werden.

Vorteilhaft ist es außerdem, wenn nicht nur automatisierbare oder automatisierte Verfahrensschritte abgewickelt werden, sondern daneben auch Eingriffsmöglichkeiten für einen Nutzer angeboten werden. Eine solche Eingriffsmöglichkeit kann z. B. eine Sortierschnittstelle für ein kontrolliertes Umändern durch einen Benutzer sein. Diese Sortierschnittstelle kann so arrangiert sein, dass der Nutzer nicht beliebige Änderungen durchführen kann, sondern nur solche Änderungen durchführen darf, die zu einem schlüssigen Ergebnis bzw. zu einer schlüssigen Prüfantwort führen. Dadurch wird sichergestellt, dass das Verfahren zur Vereinfachung, Richtigstellung, Anpassung und/oder Adaptierung der Zuordnungen einer Messanordnung nicht durch einen (unbedachten) Benutzer in sein Gegenteil verkehrt werden kann.

Anhand einer Messzeit oder eines Messzeitpunktes kann das Erkennungsmerkmal an seine richtige Stelle in der Zuordnung einsortiert werden. Insbesondere auf Grund von zeitlichen Einflüssen und zeitlichen Komponenten kann eine Zuordnung vorteilhafterweise erfolgen.

Die erfindungsgemäße Messanordnung kann sich dadurch auszeichnen, dass auf ihr, insbesondere auf ihren Messaufnehmern und auf wenigstens einem zentral angeordneten Messdatensammler, ein nach weiter oben stehenden Kriterien ausgeführtes Messverfahren läuft.

Vorteilhafterweise sind alle Messaufnehmer über wenigstens eine Schnittstelle an einem Messdatensammler angebunden, der z. B., im Falle einer Notlichtversorgung, Teil der Zentralbatterieanlage sein kann oder, im Fall einer unterbreitungsfreien Stromversorgung, Teil eines Managementmoduls sein kann.

Die zuvor dargestellten Kombinationen und Ausführungsbeispiele lassen sich auch in zahlreichen weiteren Verbindungen und Kombinationen betrachten.

Im Verfahren zur Anpassung und/oder Adaptierung der Zuordnung der Messaufnehmer zu jeweils einem Objekt oder - in einer alternativen Ausgestaltung - zu einer Gruppe von Objekten kann zur Vereinfachung und Richtigstellung in einem letzten Verfahrensschritt auf Plausibilität, Richtigkeit und Schlüssigkeit geprüft werden. Das Prüfungsergebnis kann auch noch zusätzlich markiert, gespeichert und ggf. archiviert werden. Es sei hervorgehoben, dass "in einem letzten Verfahrensschritt" nicht notwendigerweise bedeutet, dass damit der allerletzte Verfahrensschritt gemeint ist, sondern es kann auch einer der letzten Verfahrensschritte gemeint sein.

Es kann z. B. eine Eingabemaske oder ein Eingabefeld dafür vorgesehen sein, über die Eingabemaske oder über das Eingabefeld eine Montagereihenfolge der elektrochemischen Konverter und/oder der Messaufnehmer bzw. der Messsensoren, insbesondere ergänzend zu halb-automatisiert oder gänzlich automatisiert ermittelten Zuordnungen, in der Messanordnung hinterlegen zu können. Hierfür kann ein Terminalprogramm in der Messanordnung betrieben werden. Auf diese Weise kann ein weiterer Abgleichschritt ermöglicht werden. Durch eine Zuordnung, die möglichst bedienerunabhängig durchgeführt werden kann bzw. abläuft, ergibt sich eine Abbildung der Anordnung der Objekte (z. B. der elektrochemischen Konverter), die mit einer gewissen Wahrscheinlichkeit tatsächlich dem Array entspricht. Es sind aber Konstellationen vorstellbar, durch die eine Abbildung erzeugt wird, die auf nicht eindeutigen Messdaten basiert. Die Abbildung ist in einem solchen Fall das Ergebnis einer nicht eindeutigen Zuordnungsvorschrift. Wird als einer der letzten Verfahrensschritte eine Prüfung auf Plausibilität, Richtigkeit oder Schlüssigkeit durchgeführt, z. B. anhand von einer eingegebenen Montagereihenfolge, so können auch solche Fälle aufgelöst werden, bei denen eine von mehreren gleich wahrscheinlich existierenden Anordnungen als die tatsächlich gegebene bzw. vorliegende auszuwählen ist.

Außerdem kann so ein an einem Ende der Zuordnung durchzuführender Verfahrensschritt dazu verwendet werden, Fehler in der Zuordnung noch nachträglich zu korrigieren.

Werden die Daten zu einer (von einem Monteur (angeblich) vorgenommenen) Montagereihenfolge noch früher in den Zuordnungsalgorithmus eingebunden, d. h. nicht als letzter Verfahrens- bzw. Rechenschritt, sondern in einem früheren Verfahrensschritt, so kann mit solchen Maßnahmen eine Verkürzung einer benötigten Rechenzeit für die Erstellung der Zuordnung erreicht werden.

Ein vorteilhaftes Verfahren zur automatischen Sensorzuweisung kann anhand verschiedener Zuweisungskriterien durchgeführt werden, genauer

1. anhand der Anschlusszeitpunkte,

2. anhand der ersten Empfangszeitpunkte,

3. anhand der ersten Empfangszeitpunkte und von Seriennummern oder

4. anhand der Anschlusszeitpunkte und der Seriennummern.

In einer Ausgestaltung werden die Messaufnehmer, die auch als Messsensoren bezeichnet werden können, bei einem ausgeschalteten Terminal Strang für Strang der Reihe nach angeschlossen. Nach einem Einschalten berechnet eine entsprechend programmierte Terminal-Software den Zeitpunkt, zu dem jeder Messsensor angeschlossen wurde (im Sinne einer Startzeit). Dementsprechend wird anhand der so berechneten Startzeiten der Datensatz sortiert. Sollen dann noch weitere Anpassungen vorgenommen werden, so können, z. B. durch wenige "Mausklicks", weitere Zuordnungen zwischen Batterienummern und Messsensorzuordnungen durchgeführt werden.

So ist es auch möglich, die extern zur Verfügung stehende Energie des Akkumulators an Messeingängen des Messaufnehmers zum Starten einer messaufnehmerinternen Uhr oder Zeitbasis zu nutzen (im Sinne eines Zeitgebers). Sobald ein Messaufnehmer angeschlossen wird, startet - in einer Ausgestaltung der Erfindung - ein interner, regelmäßig inkrementierender Zähler, sodass aus einer übertragenen Zeit oder einer übertragenen Zeitdauer Rückschlüsse gebildet werden können, wann welcher Messaufnehmer angeschlossen worden ist. Insbesondere im Fall eines nachträglich ausgetauschten Akkumulators und dem dabei neuerlich angeschlossenen Messaufnehmer lässt sich einengen, wo welcher Messaufnehmer verbaut ist. Die auf diese Weise ermittelten Positionen können in einer Darstellung hervorgehoben werden, z. B. indem sie geeignet markiert werden.

Bei dem Verfahren anhand der ersten Empfangszeitpunkte können die Messsensoren während eines laufenden Terminals Strang für Strang der Reihe nach angeschlossen werden. Es wird jeweils gewartet, bis der jeweilige Messsensor vom Terminal erkannt wurde. Die Terminal-Software speichert den Zeitpunkt, zu dem jeder Messsensor das erste Mal empfangen wurde (im Sinne eines ersten Empfangs). Es erfolgt eine entsprechende Sortierung der empfangenen Datensätze. Sollen dann darüber hinaus weitere Zuordnungen stattfinden, so kann eine geeignete Schnittstelle als Teil der Zuordnungssoftware, z. B. durch wenige "Mausklicks", weitere Batterienummernzuordnungen anbieten.

Ein Installateur kann die ihm zur Verfügung stehenden und von außen sichtbaren Seriennummern bei der Installation in der richtigen Reihenfolge berücksichtigen. Eine sorgfältige und weise programmierte Terminal-Software erkennt die Messsensoren und sortiert sie anhand ihrer Seriennummern. Sollen weitere Zuordnungen erfolgen, kann dies z. B. durch eine zusätzlich angebotene Eingabemaske durchgeführt werden.

Eine solche Eingabemaske kann vorsehen, dass ein (berechtigter) Bediener der Software per Hand eine erste Zuordnung der Messaufnehmer zu der tatsächlichen Anordnung des Arrays aus elektrochemischen Konvertern vornimmt. Sind erste Orientierungswerte eingepflegt, können mithilfe von geeigneten Algorithmen (siehe oben) die tatsächlichen Zuordnungen ermittelt werden. Wird ein "parsing" durchgeführt, so kann die per Hand eingepflegte Zuordnung korrigiert werden. Ein "parsing" kann noch schneller abgewickelt werden als eine komplette Neu-Zuordnung (ohne jegliche Anhaltspunkte).

Besonders vorteilhaft ist es, wenn alle zuvor aufgezeigten Verfahren als Zuordnungsalgorithmen in einer Messanordnung implementiert sind. Laufen diese Verfahren nebeneinander und aufeinander abgestimmt ab, so kann einem (Elektro-)Installateur die Einrichtung eines Arrays mit elektrochemischen Konvertern extrem erleichtert werden. Soll dieser z. B. ein Array aus 80 elektrochemischen Konvertern, von denen jeweils 40 in einem Strang zusammengefasst sind, aufbauen, so ist er bezüglich der Zuordnungstätigkeit, je nach Ausgestaltung des Zuordnungsalogrithmus', nach wenigen Minuten mit seiner Arbeit fertig und hat dabei sogar häufig auftretende Fehler vermieden.

In einer weiteren Ausführungsform kann folgendes Vorgehen einem (Elektro-)Installateur nahegelegt werden. Es kann ihm empfohlen werden, die Messsensoren der Reihe nach zu montieren. Anschließend soll ein solcher (Elektro-)Installateur das Gesamtsystem der unterbrechungsfreien Stromversorgung starten und die entsprechende Zuordnungs-Software in einen bedienbaren Zustand bringen. In einem ersten Zuordnungsschritt kann er die Messsensoren den Startzeiten entsprechend aufsteigend sortieren lassen. Sobald alle Sensoren ordnungsgemäß sortiert sind, nachdem ihm bekannt ist, wie viele elektrochemische Konverter er installiert hat, kann er "per default" alle Messsensoren einem ersten Strang zuordnen. Anschließend kann er eine gewisse Anzahl elektrochemischer Konverter einem zweiten Strang zuordnen. Durch Betätigen eines Bedienknopfes "alle füllen" werden die Zuordnungen abgeschlossen. Ganz zum Schluss ist das ermittelte Ergebnis nur noch zu speichern, damit das als zutreffend markierte Ergebnis erneut zur Verfügung steht.

Noch einmal etwas abstrahierter dargestellt kann auch gesagt werden, das beanspruchte Verfahren beschäftigt sich mit der Zuordnung von Messaufnehmern bzw. Überwachungsbausteinen von elektrochemischen Konvertern, die z. B. zur Messung einer Spannung, einer Temperatur, eines Stroms, einer Konzentration und/oder eines Widerstands dienen, oder einer Gruppe dieser elektrochemischen Konverter, z. B. von Akkumulatoren, in einem Array von zu messenden Objekten. Das Verfahren ist an einer zentralisierten Stelle ausführbar, um eine Entsprechung eines Arrangements der Messaufnehmer mit einer räumlichen und/oder elektrischen Anordnung der zu messenden Objekte herzustellen. Dabei können verschiedene Messungen strangweise und/oder arrayweise durchgeführt werden.

Eine weitere Möglichkeit einer Messung, die durchgeführt wird, um die Position eines Messaufnehmers in einem Array zu ermitteln, ist durch Berücksichtigung der Innenwiderstände der Akkumulatoren, insbesondere in einem Strang, gegeben. Jeder Akkumulator hat, sofern der Akkumulator in einem einwandfreien Zustand ist, einen Innenwiderstand, der in einem Widerstandswertebereich angesiedelt ist, d. h. nicht unterhalb und auch nicht oberhalb eines bestimmten Werts liegt. Hierbei gehen in die Messung des Innenwiderstands die übrigen Innenwiderstände eines aktiven Strangs ein.

Eine weitere Möglichkeit einer Messung, die durchgeführt wird, um die Position eines Messaufnehmers in einem Array zu ermitteln, basiert auf dem Prinzip "Signallaufzeiten zu und von einem Akkumulator". Die Reflexionen von aufmodulierten Wellen an den Innenwiderständen eines Akkumulators können Rückschlüsse zu der Position des Akkumulators im Array geben (z. B. auf Basis der Reflexionen an einem Widerstand).

Eine gleichfalls interessante Zuordnung, die automatisiert bzw. teilautomatisiert erfolgen kann, besteht darin, die korrekten Batterienummern (bzw. die korrekten Nummern zu den einzelnen elektrochemischen Konvertern) den Messaufnehmern zuzuordnen. Es gibt Installationsfälle, bei denen bekannt ist, in welcher Reihenfolge jeweils ein einzelner Messaufnehmer an den jeweils ihm zugeordneten elektrochemischen Konverter, z. B. im Sinne "seiner" Batterie, angeschlossen wurde. Kommt noch hinzu, dass der jeweils exakte Anschlusszeitpunkt archiviert ist, z. B. anhand der jeweiligen Startzeit des Messaufnehmers, so lässt sich aus diesen beiden Daten pro elektrochemischen Konverter die Zuordnung zwischen Messaufnehmer und elektrochemischen Konverter ableiten.

Werden Betriebs- bzw. Einschaltzeiten als Grundlage einer Zuordnung zwischen räumlicher Positionierung und einem Vermerken der Seriennummern der Messaufnehmer herangezogen, kann der als Empfänger arbeitende Messdatensammler eine Startzeit für jeden Messaufnehmer anhand von Zeitmarken in den Messdaten extrapolieren und zu einem späteren Zeitpunkt, eventuell sogar noch Stunden später, exakt ermitteln. Besonders interessant ist der Zeitpunkt, zu dem der letzte Messaufnehmer an seinem elektrochemischen Konverter angeschlossen worden ist. Ein Installationsablauf kann z. B. so durchgeführt werden, dass erst ein Messaufnehmer nach dem anderen Messaufnehmer angeschlossen wird und der Empfänger "Messdatensammler" als letzte Komponente eingeschaltet wird. In einer solchen Situation werden die Betriebszeiten jedes einzelnen Messaufnehmers nachträglich ermittelt. Werden Arrays mit 192 Akkumulatoren oder sogar noch mehr als 192 Akkumulatoren in Betrieb gesetzt, so kann eine solche Inbetriebnahmephase nicht nur mehrere Stunden, sondern sogar mehrere Tage in Anspruch nehmen. Wird als letzte Komponente der Messanordnung der Messdatensammler eingeschaltet, so liegt zwischen dem Einschalten des ersten Messaufnehmers und dem Einschalten des Messdatensammlers ggf. eine Inbetriebnahmephase von mehreren Tagen.

Zusätzlich kann in einer vorteilhaften Weiterbildung vorgesehen sein, dass die Montagereihenfolge vom Benutzer, z. B. einem Elektro-Installateur, über eine Eingabemaske eingegeben werden kann.

Wird der Schritt der ergänzenden Eingabe der Montagereihenfolge in dem Ablauf der Inbetriebnahme oder in dem Ablauf der Reparatur eines Arrays vorgesehen, so steht eine weitere Variante der bisher beschriebenen Verfahren und Kombinationen von Verfahren zur Verfügung. Hierdurch wird die streng durchgeführte Montagereihenfolge zur Bestimmung der Reihenfolge der Batterien bzw. der Akkumulatoren im Strang dahingehend aufgeweicht, dass nicht mehr dem strangweise und seriellen Ablauf zu folgen ist (in dem Sinn, dass Strang 1, Batterie 1, dann Batterie 2, dann Batterie 3, dann Batterie 4, dann Batterie 5 usw., anschließend dann Strang 2, Batterie 1, dann Batterie 2, dann Batterie 3 usw nicht mehr möglichst minutiös befolgt werden muss).

Aufgrund der beschriebenen Messanordnung und der dadurch zur Verfügung stehenden Messverfahren kann ein Installateur, etwa wenn die Arbeitssicherheit oder die Praktikabilität es gebietet, von dem ihm vorgegebenen Montage-Reihenfolge-Schema abweichen. Erleichternd kommt hinzu, dass der Installateur dem System mitteilen kann, in welcher Reihenfolge die Messaufnehmer - seiner Meinung nach oder seiner Erinnerung nach - installiert worden sind.

In der Praxis findet sich häufig die Ausgangssituation, dass die Batterien auf irgendeine Weise in einer Reihenfolge, also zumindest teilweise in Reihe geschaltet sind. Außerdem gibt es häufig Systeme, auf deren Batterien Aufkleber angebracht sind. Auf den Batterien eines Systems sind Aufkleber mit z. B. Seriennummern angebracht.

Es kann die Situation eintreten, dass die Messaufnehmer in einer abweichenden Montagereihenfolge angebracht, d. h. angeschlossen werden und dann angeschlossen bleiben. Diese Reihenfolge entspricht nicht der Reihenfolge der Batterien.

In einer Ausgestaltungsvariante wird nach Anschluss aller Messaufnehmer der Empfänger eingeschaltet. Eine Software auf dem Empfänger ist dazu gestaltet, von den Messaufnehmern die Datenpakete zu empfangen. Auf diesem Weg sind zunächst nur die Seriennummern bekannt. Aus den Datenpaketen können aber auch noch die Startzeit von jedem einzelnen Messaufnehmer ermittelt bzw. aus anderen Daten ausgelesen werden.

Nachfolgend soll eine mögliche Bedienoberfläche einer Software, z. B. in dem Messdatensammler oder in einem gesonderten Steuerrechner bzw. Steuercomputer, näher dargestellt werden:

1. Ein "User" wählt Anordnung "Nach Startzeit aufsteigend".
2. Die Empfängersoftware ordnet die Messaufnehmer nach Startzeit aufsteigend an (z. B. durch die Seriennummern: 00-RP01, 00-RP04, 00-RP03, ...).
3. Der "User" aktiviert die Funktion "Montagereihenfolge vorgeben".

4. Der "User" gibt die Montagereihenfolge in ein Textfeld ein; ein für die Eingabe geeignetes Format kann z. B. die folgende Reihung umfassen:

Strang / Batterie [, Batterie] [, Strang / Batterie [, Batterie]].

4a. In einer weiteren alternativen Ausgestaltungsvariante können in der Software eine oder mehrere Standard-Montagereihenfolgen hinterlegt sein, aus denen der "User", z. B. mit wenigen "Klicks", eine auswählen kann.

5. Der "User" betätigt einen Steuerknopf "Alle füllen".

6. Die Software weist, insbesondere nach einer kurzen Berechnungszeit nach einem oder mehreren der zuvor vorgestellten Berechnungsverfahren, den Messaufnehmern entsprechend der Montagereihenfolge die korrekten Positionen zu.

Die erfindungsgemäße Lösung entwickelt ihren Charme u. a. auch in dem Fall, in dem Monteure, Installateure und geschultes Bedienpersonal, z. B. Vertragspartner eines bestimmten USV-Herstellers, grundsätzlich eine bestimmte Montagereihenfolge verwenden und diese im System hinterlegt ist (vgl. Punkt 4b - siehe oben).

**Figurenkurzbeschreibung**

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei

Figur 1 eine Energieversorgungseinrichtung mit mehreren Akkumulatoren und einem Messsystem zeigt,
Figur 2 eine erste Variante einer Kommunikationsschnittstelle zeigt,
Figur 3 eine zweite Variante einer Kommunikationsschnittstelle zeigt,
Figur 4 eine dritte Variante einer Kommunikationsschnittstelle zeigt,
Figur 5 eine erste räumliche Verteilung von Akkumulatoren-Messaufnehmer-Paaren darstellt,
Figur 6 eine zweite räumliche Verteilung von Akkumulatoren-Messaufnehmer-Paaren darstellt,
Figur 7 eine dritte räumliche Verteilung von Akkumulatoren-Messaufnehmer-Paaren darstellt,
Figur 8 eine weitere räumliche Verteilung von Akkumulatoren-Messaufnehmer-Paaren darstellt und
Figur 9 einen (sogenannten) Batterieschrank zeigt, in dem sich alle zuvor gezeigten räumlichen Verteilungen (und natürlich auch noch andere als die zuvor gezeigten räumlichen Verteilungen) vorliegen können.

**Figurenbeschreibung**

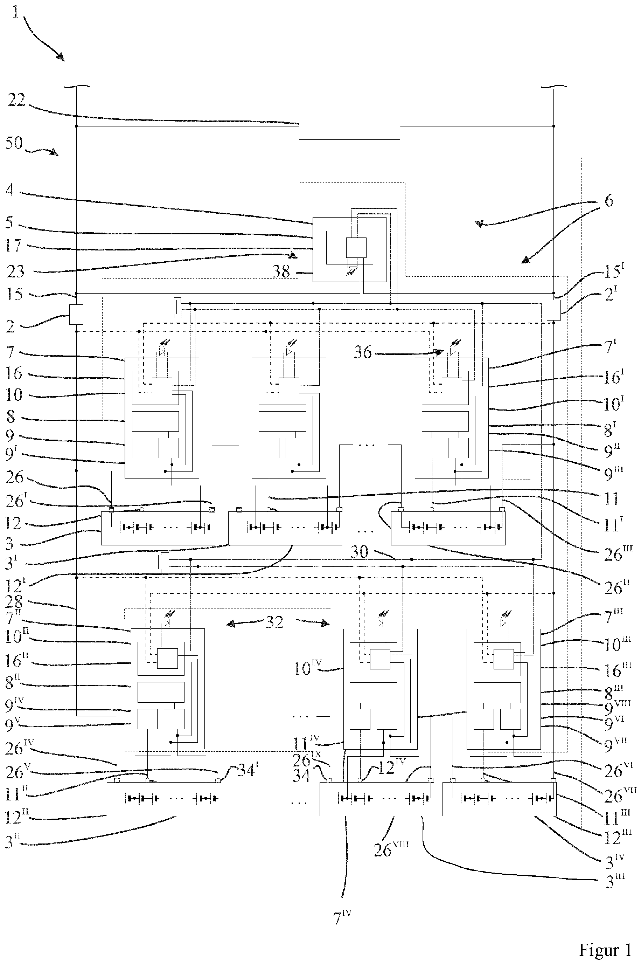

Figur 1 zeigt in schematischer Darstellung ein Messsystem 6, das eine größere Gruppe Akkumulatoren 3, $3^I$, $3^{II}$, $3^{III}$, $3^{IV}$ einer Energieversorgungseinrichtung 1 durch eine zentral angeordnete Überwachungselektronik 4 bzw. einen Messdatensammler überwachen kann. Die Energie der teilweise in Serie und teilweise parallel verschalteten Energiespeicherpakete 3, $3^I$, $3^{II}$, $3^{III}$, $3^{IV}$ wird über Energieleitungsanschlüsse 2, $2^I$ an Verbraucher, wie die Last 22, abgegeben.

Teile des Messsystems 6 sind eine Überwachungselektronik 4 und den Akkumulatoren 3, $3^I$, $3^{II}$, $3^{III}$, $3^{IV}$ zugeordnete Messaufnehmer 7, $7^I$, $7^{II}$, $7^{III}$, $7^{IV}$, die auch als Messsensoren bezeichnet werden können, insbesondere in den Fällen, in denen die messtechnische Parameterermittlung im Vordergrund bei der funktionellen Betrachtung steht. Die Überwachungselektronik 4, die auch einen Messdatensammler umfasst, umfasst außerdem einen Empfänger 5. Hierüber können Datensätze auf den Energieleitungen 15, $15^I$ abgegriffen werden.

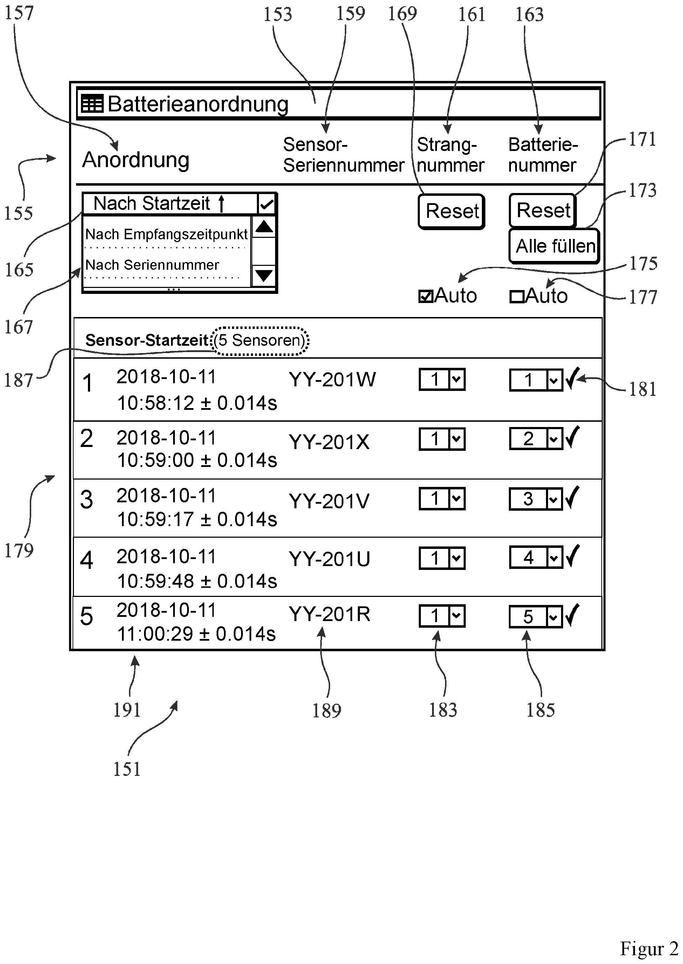

Die Energieversorgungseinrichtung 1 gemäß Figur 1 ist dazu bestimmt, über Energieleitungsanschlüsse 2, $2^I$ Energie aus Energiespeicherpaketen 3, $3^I$, $3^{II}$, $3^{III}$, $3^{IV}$ wie Blei-Akkumulatoren wenigstens einer Last 22, z. B. einem Serversystem, zur Verfügung zu stellen. Hierbei treten Belastungen für die Energiespeicherpakete 3, $3^I$, $3^{II}$, $3^{III}$, $3^{IV}$ auf. Damit die Energie auf den Energieleitungen 15, $15^I$ möglichst gut gesteuert der Last 22, z. B. in Form einer Wechselspannung, zur Verfügung gestellt werden kann, sammelt der Messdatensammler bzw. die Überwachungselektronik 4 mit seinem Empfänger 5 Daten, die über wenigstens einen der Kommunikationskanäle 28, 30, 32 zur Verfügung gestellt werden. Damit aus der Gleichspannung der Energiespeicherpakete 3, $3^I$, $3^{II}$, $3^{III}$, $3^{IV}$ eine Wechselspannung werden kann, bedarf es einer Umwandlung der Gleichspannung in eine geeignete Wechselspannung, z. B. in Wechselrichtern, die Teil der Energieleitungsanschlüsse 2, $2^I$ sind. Insgesamt bildet sich eine Batterieüberwachungseinrichtung 50 durch das Zusammenwirken einer größeren Anzahl Messaufnehmer 7, $7^I$, $7^{II}$, $7^{III}$, $7^{IV}$ und dem Messdatensammler 4 als Teil der Überwachungselektronik. Ein Messaufnehmer 7, $7^I$, $7^{II}$, $7^{III}$, $7^{IV}$ umfasst eine Messeinrichtung 9, $9^I$, $9^{II}$, $9^{III}$, $9^{IV}$, $9^V$, $9^{VI}$, $9^{VII}$, $9^{VIII}$, $9^{IX}$, einen Mikrokontroller 8, $8^I$, $8^{II}$, $8^{III}$, $8^{IV}$ und einen Sender 10, $10^I$, $10^{II}$, $10^{III}$, $10^{IV}$. Der Mikrokontroller 8, $8^I$, $8^{II}$, $8^{III}$, $8^{IV}$ führt Berechnungen durch, um die durch die Messeinrichtung 9, $9^I$, $9^{II}$, $9^{III}$, $9^{IV}$, $9^V$, $9^{VI}$, $9^{VII}$, $9^{VIII}$, $9^{IX}$ gemessenen Daten in einer aufbereiteten Form, die sich günstigerweise anhand der Figur 2 erläutern lässt, über eine Kette aus Modulator 16, $16^I$, $16^{II}$, $16^{III}$, $16^{IV}$ und einem Demodulator 17 der Überwachungselektronik 4 zur Verfügung zu stellen.

Eine Messeinrichtung, wie die Messeinrichtung 9, $9^I$, $9^{II}$, $9^{III}$, $9^{IV}$, $9^V$, $9^{VI}$, $9^{VII}$, $9^{VIII}$, $9^{IX}$, misst auf verschiedene Arten unterschiedliche Parameter, z. B. über den Messpunkt 12, $12^I$, $12^{II}$, $12^{III}$, $12^{IV}$ eine Temperatur eines Energiespeicherpaketes 3, $3^I$, $3^{II}$, $3^{III}$, $3^{IV}$. Über Anschlüsse 11, $11^I$, $11^{II}$, $11^{III}$, $11^{IV}$ können Spannungen einzelner Zellen oder Gruppen von Zellen der Energiespeicher bzw. Energiespeicherpakete 3, $3^I$, $3^{II}$, $3^{III}$, $3^{IV}$ gemessen werden. Die Energiespeicherpakete 3, $3^I$, $3^{II}$, $3^{III}$, $3^{IV}$ haben Pole wie die Pole 34, $34^I$, die als Energieanschluss 26, $26^I$, $26^{II}$, $26^{III}$, $26^{IV}$, $26^V$, $26^{VI}$, $26^{VII}$, $26^{VIII}$, $26^{IX}$ zur Verfügung stehen. Durch eine serielle Verschaltung einzelner Energiespeicherpakete 3, $3^I$, $3^{II}$, $3^{III}$, $3^{IV}$ bzw. eine parallele Verschaltung von, idealerweise mehreren, durch eine serielle Verschaltung jeweils zu einem Strang gruppierten Energiespeicherpaketen 3, $3^I$, $3^{II}$, $3^{III}$, $3^{IV}$ bildet sich eine Quelle für die Abgabe elektrischer Energie an den Energieanschlüssen 26, $26^I$, $26^{II}$, $26^{III}$, $26^{IV}$, $26^V$, $26^{VI}$, $26^{VII}$, $26^{VIII}$, $26^{IX}$, die dann auch an den Energieleitungen 15, $15^I$ zur Verfügung steht.

Die gesamte Anordnung kann auch (elektrochemisch nicht ganz korrekt) als Batterieüberwachung 23 bezeichnet werden, die sich somit als verteiltes System aus (u. a.) Messaufnehmern 7, $7^I$, $7^{II}$, $7^{III}$, $7^{IV}$ und wenigstens einem Messdatensammler 4 zusammensetzt.

Wie ebenfalls aus der Figur 1 zu entnehmen ist, gibt es drei verschiedene Kommunikationskanäle 28, 30, 32. Der erste Kommunikationskanal 28 benutzt die Energieleitungen 15, $15^I$. Der zweite Kommunikationskanal 30 überträgt über einen speziellen Bus, genauer einem (aus einem elektrischen oder hardware-bezogenen Blickwinkel gesehenen) CAN-Bus (siehe z. B. die terminierenden Widerstände). Der dritte Kommunikationskanal 32 bildet sich durch Lichtübertragung aus, wie an den Lichtemittern 36, den LEDs und an dem lichtabhängigen Widerstand, dem Empfänger 38 im Blockschaltbild der Figur 1 zu erkennen ist.

Aus dem Blockschaltbild der Figur 1 ist zu entnehmen, dass die Energieanschlüsse 26, $26^I$, $26^{II}$, $26^{III}$, $26^{IV}$, $26^V$, $26^{VI}$, $26^{VII}$, $26^{VIII}$, $26^{IX}$ an anderen Stellen zwischen den Zellen der Energiespeicherpakete 3, 3', $3^{II}$, $3^{III}$, $3^{IV}$ eine Spannung abgreifen als die Anschlüsse 11, $11^I$, $11^{II}$, $11^{III}$, $11^{IV}$ für die Messeinrichtung 9, $9^I$, $9^{II}$, $9^{III}$, $9^{IV}$, $9^V$, $9^{VI}$, $9^{VII}$, $9^{VIII}$, $9^{IX}$ So ist es möglich, dass einzelne Zellen eines Energiespeicherpaketes 3, $3^I$, $3^{II}$, $3^{III}$, $3^{IV}$ als Bedämpfungsglieder zwischen Energieleitung 15, $15^I$ und dem Anschluss 11, $11^I$, $11^{II}$, $11^{III}$, $11^{IV}$ für die Messeinrichtung 9, $9^I$, $9^{II}$, $9^{III}$, $9^{IV}$, $9^V$, $9^{VI}$, $9^{VII}$, $9^{VIII}$, $9^{IX}$ zwischengeschaltet sind.

Figur 2 zeigt eine Eingabemaske 151, über die insbesondere eine durch einen Nutzer der Messanordnung ausgeführte, eigenständige bzw. ergänzende Sortierung der Anordnung der elektrochemischen Konverter oder der Messaufnehmer möglich ist. Die Eingabemaske 151 zeigt in ihrem Kopf als Array-Bezeichnung 153 die Art des Arrays, vorliegend eine Batterieanordnung. Unterhalb der Array-Bezeichnung 153 sind Spaltentitel 155 aufgeführt, durch die dem Betrachter der Eingabemaske 151 bekannt gegeben wird, welche Daten er nachfolgend bzw. unterhalb des Spaltentitels 155 sieht. Die Eingabemaske 151 hat eine Spalte "Anordnung" 157, eine Spalte "Sensor-Seriennummer" 159, eine Spalte "Strangnummer" 161 und eine Spalte "Batterienummer" 163. Unterhalb dieser Spaltenbeschriftungen 157, 159, 161, 163 werden die messtechnisch ermittelten Daten zeilenweise, d. h. also tabellarisch aufgelistet.

Die empfangenen Daten, die in der Eingabemaske 151 aufgelistet werden, können nach unterschiedlichen Hauptzuordnungskriterien 165, die als ausgewähltes Erkennungsmerkmal zu nutzen sind, arrangiert werden. Anhand des Hauptzuordnungskriteriums 165 kann festgelegt werden, wie die einzelnen Positionen der Batterieanordnung 153 bestimmt werden. Neben dem Sortierkriterium "Startzeit" als Hauptzuordnungskriterium 165 bietet die Eingabemaske 151 alternative Erkennungsmerkmale 167.

Neben diesen Zuordnungs- und Sortierkriterien 165, 167 bietet die Eingabemaske 151 weitere Bedienknöpfe 169, 171, 173, durch die ein Neueinlesen der Daten, eine Neuzuordnung des Arrangements des Arrays und ein sukzessives Einlesen gestartet werden. Anhand zweier Automatisierungschalter 175, 177 kann ein Nutzer der Eingabemaske 151 bestimmen, ob das System der Messanordnung bzw. das Messsystem 6 (siehe Figur 1) automatisiert die Zuordnung durchführen soll (durch Häkchen bei beiden Automatisierungsschaltern 175, 177) oder ob eine Einflussnahme durch den Nutzer gewünscht ist. Die beiden Automatisierungsschalter 175, 177 sind somit Quasi-Sperrtasten für die Strangnummernangabe in der Strangnummer 183 und für die Batterienummernangabe in der Batterienummer 185. Unterhalb der Bedienknöpfe 169, 171, 173 und der Automatisierungsschaltungen 175, 177 bietet die Eingabemaske 151 eine Sensortabelle 179, durch die zu jedem elektrochemischen Konverter die Strangnummer 183 und die Batterienummer 185 bekannt gegeben werden. Anhand der Anzeige Prüfungsantwort 181, die in einer alternativen Ausgestaltung auch durch eine Farbwahl wie Grün zum Ausdruck gebracht werden kann, wird dem Nutzer der Eingabemaske 151 signalisiert, dass das als Batterieanordnung 153 angebotene Array richtig und zutreffend ist.

Aus den ermittelten Batterienummern 185 und den Strangnummern 183 lässt sich die Sensorgesamtzahl 187 des Arrays ableiten. Einzelne Werte der Sensortabelle 179 sind Seriennummern 189 und Messzeitpunkte 191.

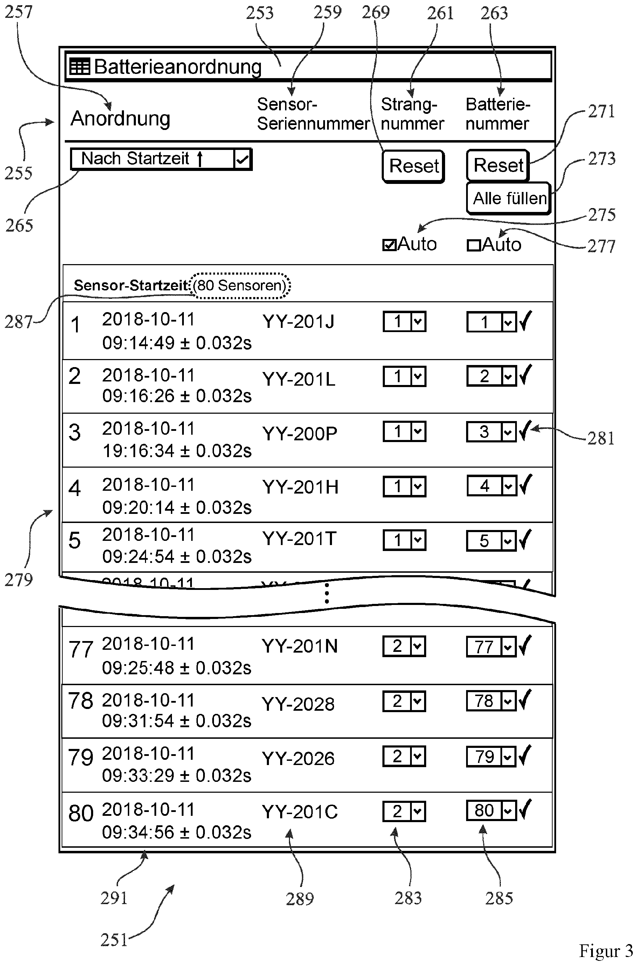

Anhand der in Figur 3 gezeigten Sortierschnittstelle 251, die als Eingabemaske ausgestaltet zum Nachbessern von gegebenenfalls automatisch ermittelten Zuordnungen von einem Bediener der Software, mit der Messverfahren an einer Batterieanordnung durchführbar sind, genutzt werden kann, lässt sich die Anordnung der Akkumulatoren der Batterieanordnung gemäß Array-Bezeichnung 253 betrachten, überprüfen und gegebenenfalls verändern. Unter der Array-Bezeichnung 253 sind Spaltentitel 255 aufgeführt, durch die ein Nutzer der Batterieüberwachungssoftware mit einer entsprechenden Sortierschnittstelle 251 die Daten der Sensortabelle 279 in ihren einzelnen Spalten 257, 259, 261, 263 herauslesen kann. In der Spalte "Anordnung" 257 werden die einzelnen Akkumulatoren durchnummeriert. In der Spalte "Sensor-Seriennummer" 259 lässt sich von jedem einzelnen Messaufnehmer 7, $7^I$, $7^{II}$, $7^{III}$, $7^{IV}$ (siehe Figur 1) dessen Seriennummer entnehmen. Aus der Strangnummer 261 ergibt sich, in welchem Strang die jeweilige Batterie angeordnet ist. Die Sensortabelle 279 verfügt über zwei Stränge "1" und "2" gemäß Strangnummer 261. Die Spalte "Batterienummer" 263 nummeriert die Batterie fortlaufend durch. Die Sensortabelle 279 lässt sich nach einzelnen Hauptzuordnungskriterien 265 strukturieren; im Ausführungsbeispiel nach Figur 3 wird die Batterieanordnung nach der Startzeit jedes Messaufnehmers strukturiert.

Mit Hilfe des ausgewählten Erkennungsmerkmals 265 "Startzeit" ergibt sich eine bestimmte Zuordnungsreihenfolge der Akkumulatoren und ihren Seriennummern gemäß der "Sensor-Seriennummer" 259.

Zur Bedienung der Eingabemaske 251 hat diese fünf verschiedene Bedienknöpfe 269, 271, 273 bzw. Automatisierungsschalter 275, 277. Eine weitere Einflussnahme auf die Sensortabelle 271 ist durch die Auswahl des Erkennungsmerkmals 265 möglich. Sind die Nummern, die als Strangnummern 283 und die Nummern, die als Batterienummern 285 zur Verfügung stehen, in einer schlüssigen Weise arrangiert, so ergibt sich eine positive Prüfungsantwort 281, die durch Haken zum Ausdruck gebracht wird. Aus den Batterienummern 285 und den Strangnummern 283 ergibt sich die Sensorgesamtzahl 287 des Arrays 253 "Batterieanordnung". Weitere Informationen in der Sensortabelle 279 sind die Seriennummern 289 und die jeweiligen Messzeitpunkte 291.

Anhand einer Kombination aus Seriennummer 289 und Messzeitpunkt 291 kann jeder Batterienummer 285 eine eindeutige Position in einem der Stränge, ausgedrückt durch die Strangnummer 283, zugeordnet werden. Ergibt sich eine eindeutige Zuordnung und Auflösung, so finden sich positive Prüfungsantworten 281 hinter jeder Zeile der Sensortabelle 279 und somit zu jedem Akkumulator der Batterieanordnung gemäß Array-Bezeichnung 253.

Die in den einzelnen Figuren gezeigten Ausgestaltungsmöglichkeiten lassen sich auch untereinander in beliebiger Form verbinden.

Werden die Figuren 2 und 3 miteinander verglichen, so erkennt ein Leser, dass die Beispiele mit einem Strang (siehe Figur 1) und mit zwei Strängen (siehe Figur 3) unproblematisch auf Akkumulator-Arrays mit mehr als zwei Strängen und auch mehr als vierzig Akkumulatoren pro Strang erweitert werden können. Mögliche physikalische Grenzen werden durch die Eingabemaske 151, 251 nicht festgelegt, wesentlich bei der Dimensionierung und Skalierung des Arrays ist die benötigte Spannung und der benötigte Strom aus dem Array elektrochemischer Konverter.

Soll eine Eingabemaske 151, 251 zur Verfügung gestellt werden, die weniger automatisiert die Zuordnung durchführt, so können schlichtweg mehr Bedienknöpfe 269, 271, 273 und gegebenenfalls weniger Automatisierungsschalter 275, 277 in einer alternativen Ausführungsform zur Verfügung gestellt werden (z. B. aus allgemeinen Sicherheitserwägungen oder aufgrund von Zulassungen durch technische Überwachungsvereine nur für solche, weniger automatisierte Fälle).

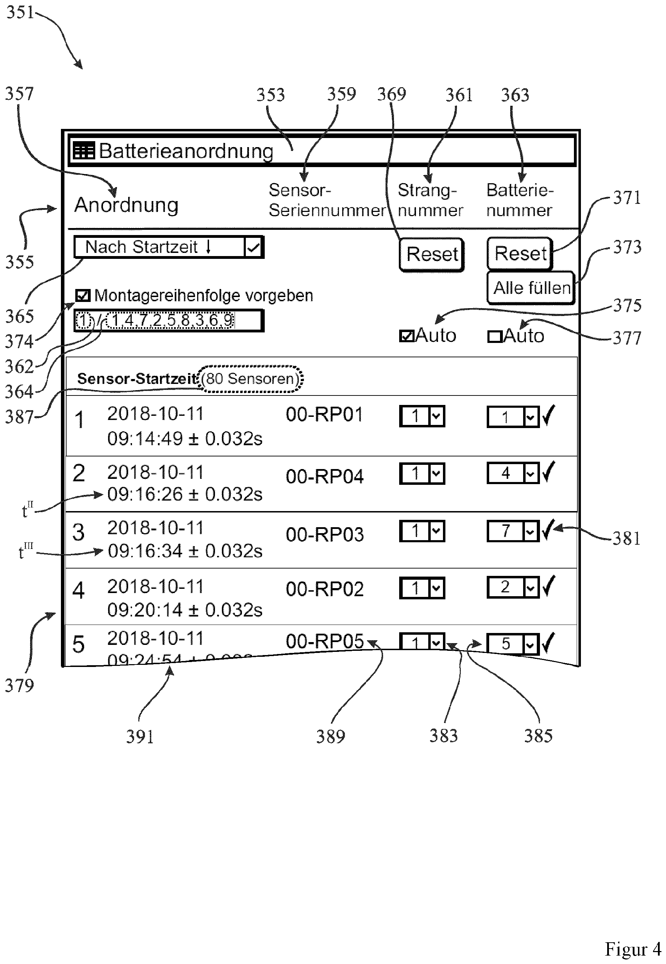

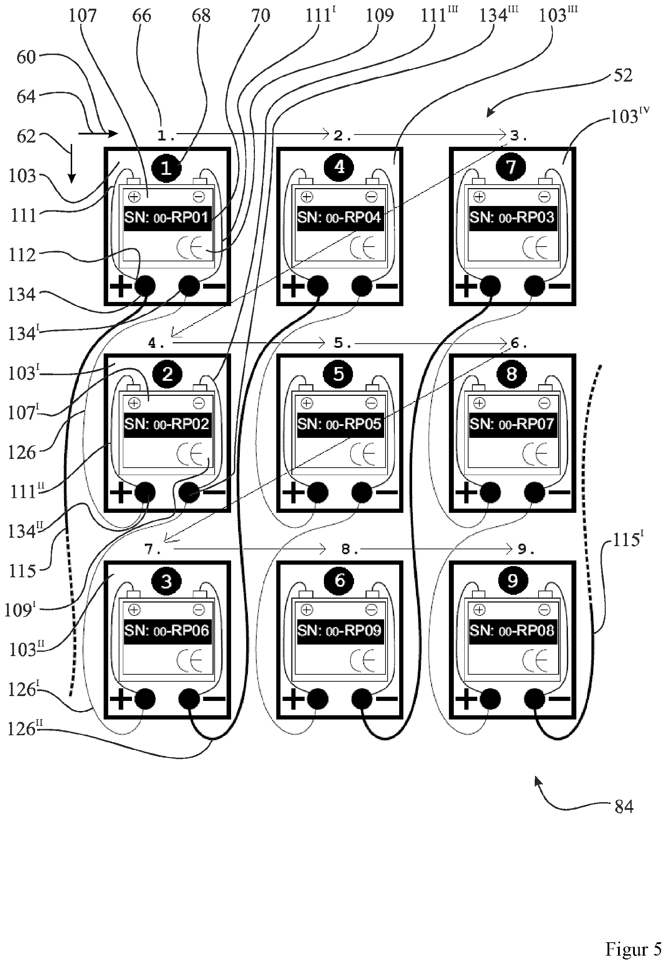

Figur 4 zeigt ein weiteres Beispiel einer Eingabemaske 351, die eine Kommunikationsschnittstelle zu einem Bediener oder Überwacher eines Arrays mit einer Messanordnung darstellt, zu der auch Messaufnehmer gehören, wie z. B. in den Figuren 5, 6, 7, 8 und 9 gezeigt. Die Eingabemaske 351 ist zugleich eine Ausgabemaske für Informationen zu dem Array. Durch eine Arraybezeichnung 353 wird eine bestimmte Batterieanordnung bezeichnet, deren Aufstellungskoordinate als Teil der Arraybezeichnung 353 in der Messanordnung hinterlegbar ist, wie eine Gebäudebezeichnung, wie eine Etagenbezeichnung oder wie eine Raumbezeichnung.

Die in Figur 4 dargestellte Eingabemaske 351 kann in weitere Teile unterteilt werden. Es gibt in der Eingabemaske 351 einen matrixartigen Bereich bzw. eine Matrix-Struktur, der bzw. die dem Array nachgebildet ist und in der Spalten mit Spaltentiteln 355 existieren. Außerdem gibt es eine Struktur bzw. einen Bereich mit Feldern, die in Gestalt von Bedienknöpfen 369, 371, 373, in Gestalt von Automatisierungsschaltern 375, 377 sowie in Gestalt wenigstens eines Eingabeschalters 374 vorliegen. Diese Felder Bedienknöpfe 369, 371, 373, Automatisierungsschalter 375, 377 und Eingabeschalter 374 dienen zur Eingabe von weiteren Parametern, Angaben und Daten für die Messanordnung.

Der manuelle Eingabeschalter 374 aktiviert ein Eingabefeld für eine Eingabemöglichkeit durch eine Tastatur, wobei das Eingabefeld aus einem Strangnummerneingabefeld 362 und aus einem Batterienummernfolgeeingabefeld 364 zusammengesetzt ist. Ein Benutzer kann in den jeweiligen Feldern Strangnummerneingabefeld 362 und Batterienummernfolgeeingabefeld 364, die als Zahlenfelder ausgestaltet sind, der als Kommunikationsschnittstelle fungierenden Eingabemaske 351 die Reihenfolge notieren, in der die Montage von Batterien vorgenommen wurde. Diese Notierung kann anhand der Identifikationsnummern erfolgen.

Diese Reihenfolge bzw. die Montagereihenfolge kann mit einer automatisch ermittelbaren Zuordnung von Batterienummern 363 übereinstimmen. Im Falle einer Inkonsistenz (bei den ermittelten Daten) ist die Durchführung einer Fehlersuche erforderlich. Eine Fehlerursache kann z. B. in einer nicht korrekt durchgeführten elektrischen Installation liegen.

In dem Beispiel nach Figur 4 wurde zutreffenderweise eine Batterie mit der Nummer 2 schaltungstechnisch in einer Nachreihung hinter einer Batterie mit der Nummer 7 montiert. Aufgrund der in der in Figur 4 gezeigten Eingabemaske 351 angezeigten automatischen Sortierung nach dem wählbaren Hauptzuordnungskriterium 365, demnach das Kriterium "Startzeit in aufsteigender Folge" ausgewählt wurde, weicht die Sortierung der Messaufnehmer gemäß der Spalte "Anordnung" 357 von der natürlichen Zahlenfolge der Batterienummern ab. Die Batterie mit der Nummer 2 gibt eine Sensor-Startzeit t" als frühesten Messzeitpunkt 391 an, zu der die Energieversorgung des zugehörigen (Mess-)Sensors (bzw. Messaufnehmers) mit der Seriennummer "00-RP01" begonnen hat. Sollte die zeitliche Auflösung noch genauer zu wählen sein, so ist die Initialisierungszeit zwischen Energieversorgung des Messaufnehmers und erster Messung noch zusätzlich aus der Sensor-Startzeit $t^{II}$ herauszurechnen. Zu einem späteren Messzeitpunkt 391 mit der Sensorstartzeit $t^{III}$ ist als Nächstes die Batterie mit der Nummer 7 montiert worden. Hierbei ist der Akkumulator mit einem Messaufnehmer mit der Seriennummer "00-RP03" verbunden worden.

Auch alternative Hauptzuordnungskriterien 365 können gewählt werden. Alternative Hauptzuordnungskriterien 365 sind auswählbar. Beispielsweise ist eine Auflistung in der Reihenfolge der Einträge nach Seriennummer 389, die in der Spalte "Sensor-Seriennummer" 359 angezeigt sind, auswählbar. Gemäß dem gewählten bzw. geänderten Hauptzuordnungskriterium 365 wird die Sensortabelle 379 umsortiert. Eine Umsortierung von Zeilen gemäß einer der anderen Spalten ("Sensor-Seriennummer" 359, "Strangnummer" 361) kann ebenfalls vorgenommen werden. Eine solche Sortierung kann z. B. bezüglich der Einträge der Strangnummern 383 oder bezüglich der Einträge von Batterienummern 385 vorgenommen werden.

Anhand eines Prüfungssymbols als Antwort auf eine Prüfanfrage 381 ist aus der Sensortabelle 379 eindeutig ablesbar, ob nach einer Reparatur die Batterie mit der Nummer 7 fehlerfrei arbeitet und somit ein Batterieaustausch oder auch nur ein Sensoraustausch den gewünschten Erfolg gebracht hat.

Die Vorteile der zuvor beschriebenen Zuordnungsverfahren entfalten sich insbesondere bei besonders großen Arrays, z. B. bei einem Array mit 80 Messaufnehmern, wie es durch die in Figur 4 gezeigte Sensorgesamtzahl 387 zum Ausdruck kommt.

In den Figuren Figur 5, Figur 6, Figur 7, Figur 8 sowie Figur 9 sind verschiedene Stränge 52, 54, 56, 58, 152, 154, 156, 158 von Akkumulatoren, beispielhaft sei der in Figur 5 gezeigte Akkumulator 103 genannt, gezeigt, die in einem Array, wie dem in Figur 5 gezeigten Array 84, angeordnet sind. Die Figuren Figur 5 bis Figur 9 werden daher gemeinsam beschrieben. Zu der jeweiligen Figur werden vorzugsweise die in der Figur gezeigten Besonderheiten erläutert, wobei für allgemeinere Zusammenhänge auf die zuvor gemachten Erläuterungen verwiesen sei.

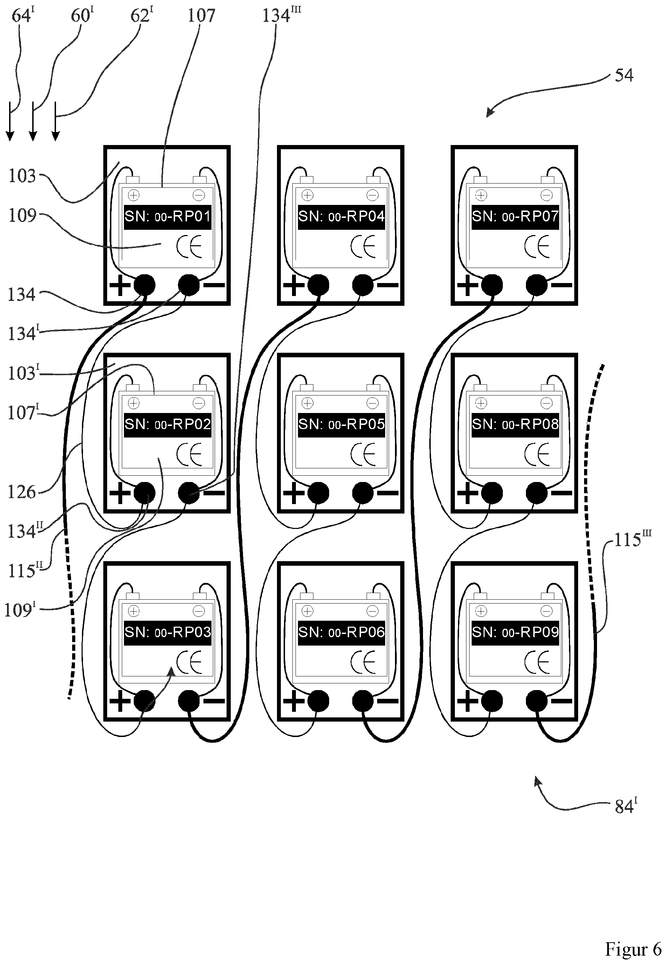

Die gezeichneten Symbole werden in diesen Figuren Figur 5, Figur 6, Figur 7, Figur 8 sowie Figur 9 in möglichst einheitlicher Weise verwendet. Es sei ausdrücklich darauf hingewiesen, dass in den Figuren gezeigte Seriennummern von Messeinrichtungen, z. B. "SN: 00-RP01" in Figur 5, in vereinfachender Weise auch in anderen Figuren, z. B. in den Figuren Figur 6, Figur 7, Figur 8 und Figur 9, wiederholt werden. Entsprechend werden z. B. auch in vereinfachender Weise Bezugszeichen für Akkumulatoren, die in Figur 5 eingetragen sind, in anderen Figuren verwendet, obgleich es sich in einem anderen Strang um einen anderen (physisch präsenten) Akkumulator handeln muss. Genauso müssten andere Messeinrichtungen und Messaufnehmer in den anderen Strängen behandelt werden. Jeder Messaufnehmer ist durch seine jeweils eindeutig individuell nur einmal vorhandene Seriennummer identifizierbar. Aus Vereinfachungsgründen und zur Förderung der Übersichtlichkeit sind die vereinfacht dargestellten Seriennummern von Figur zu Figur wiederholt worden. Die Messaufnehmer sind anhand von Messwerten (in Gestalt von "Messdatenpaketen") oder anhand eines Etiketts eindeutig identifizierbar. Beispielsweise wird für einen in Figur 5 dargestellten Akkumulator und für einen in Figur 6 dargestellten Akkumulator jeweils das gleiche Bezugszeichen 103 verwendet. Tatsächlich gibt es einen Akkumulator immer nur einmal.

Das Array 84 (nach Figur 5) ist durch eine Aufstellungsreihenfolge 60 zeilenweise bzw. ebenenweise hergestellt worden, sodass die zeitliche Abfolge der Aufstellung durch eine Folge von Aufstellungsnummern, wie der Aufstellungsnummer 66, wiedergegeben werden kann. Solche Aufstellungsnummern sind, wie z. B. zu Figur 4 erläutert wurde, nach einem bestimmten Kriterium sortiert, d. h. einer Sortierung folgend auflistbar. Die Aufstellungsreihenfolge 60 entspricht der Messeinrichtungsinstallationsreihenfolge 64.

Ein Akkumulator 103 ist durch ein Akkumulatoretikett 68 beschriftet, das eine Akkumulatoridentifikationsnummer zeigt. Alle Akkumulatoren 103, $103^I$, $103^{II}$, $103^{III}$, $103^{IV}$ tragen jeweils ihre Akkumulatoretiketten. Alle Akkumulatoren 103, $103^I$, $103^{II}$, $103^{III}$, $103^{IV}$ sind jeweils mit einem Messaufnehmer 107, $107^I$ verbunden, zu dem eine Messeinrichtung 109, $109^I$ gehört. Anders gesagt, ist ein Akkumulator 103 mit genau einer Messeinrichtung 109 verbunden. Bei der Bildung des Arrays 84 wurden neben einem ersten Akkumulator 103 zwei weitere Akkumulatoren $103^{III}$, $103^{IV}$ gesetzt. Eine zweite Reihe beginnt mit einem zweiten Akkumulator $103^I$, neben dem ebenfalls zwei weitere Akkumulatoren gesetzt sind. Eine dritte Reihe beginnt mit einem Akkumulator $103^{II}$, neben den ebenfalls zwei weitere Akkumulatoren gesetzt sind. Somit umfasst das Array 84 neun Akkumulatoren (siehe beispielhaft die Akkumulatoren 103, $103^I$, $103^{II}$, $103^{III}$, $103^{IV}$). Ein Plus-Pol 134 des ersten Akkumulators 103 ist mit einer Energieleitung 115 verbunden, die einen elektrischen Anschluss für das Array 84 bildet. Der Plus-Pol 134 des ersten Akkumulators 103 weist einen Anschluss 111 zu dem Messaufnehmer 107 auf. Ein Minus-Pol $134^I$ des Akkumulators 103 weist einen Anschluss $111^I$ zu dem Messaufnehmer 107 auf. Somit hat die erste Messelektronik 109 einen Messpunkt 112 an dem ersten Akkumulator 103.

Der Messaufnehmer 107 trägt ein Messeinrichtungsetikett 70, das eine eindeutig identifizierende Messeinrichtungsseriennummer zeigt.

In Figur 5 weicht die Aufstellungsreihenfolge 60 von einer Verkabelungsreihenfolge 62 ab. Von dem Minus-Pol 134$^I$ des ersten Akkumulators 103 führt ein Energieanschluss 126 zu einem Plus-Pol 134$^{II}$ eines zweiten Akkumulators 103$^I$. Der Plus-Pol 134$^{II}$ stellt zugleich einen Anschluss 111$^{II}$ zu einem zweiten Messaufnehmer 107$^I$. Der Minus-Pol 134$^{III}$ dient als Anschluss 111$^{III}$ zu dem zweiten Messaufnehmer 107$^I$ und damit zu der zweiten Messeinrichtung 109$^I$. Außerdem ist der Minus-Pol 134$^{III}$ des zweiten Akkumulators 103$^I$ über einen Energieanschluss 126$^I$ mit einem dritten Akkumulator 103$^{II}$ verbunden und der dritte Akkumulator 103$^{II}$ ist über einen Energieanschluss 126$^{II}$ mit dem neben dem ersten Akkumulator 103 befindlichen vierten Akkumulator 103$^{III}$ verbunden. Eine derart sich fortsetzende serielle elektrische Verbindung der Akkumulatoren 103, 103$^I$, 103$^{II}$, 103$^{III}$ führt über mehrere weitere Akkumulatoren, wie den Akkumulator 103$^{IV}$, zu der zweiten Energieleitung 115$^I$, die zur Herstellung einer elektrischen Außenverbindung des Arrays 84 dient.

In ähnlicher Weise wie der erste Strang 52, der in Figur 5 gezeigt ist, ist ein zweiter Strang 54, der in Figur 6 gezeigt ist, zwischen zwei Energieanschlüssen 115$^{II}$, 115$^{III}$ über Energieleitungen, wie die Energieleitung 126, durch eine Verkabelung zusammengeschlossen und aufgebaut. Abweichend von Figur 5 sind in Figur 6 die Akkumulatoren, wie z. B. der Akkumulator 103, durch eine Aufstellungsreihenfolge 60$^I$ zusammengestellt worden, die in einer Draufsicht als spaltenweise Anordnung bezeichnet werden kann. Die Aufstellungsreihenfolge 60$^I$ stimmt mit einer Verkabelungsreihenfolge 62$^I$ überein. Außerdem wurden alle Akkumulatoren, wie der Akkumulator 103, mit Messaufnehmern 107, 107$^I$ bzw. Messeinrichtungen 109, 109$^I$, die einer Messaufnehmerinstallationsreihenfolge 64$^I$ entsprechend montiert worden sind, ausgestattet. Die Messeinrichtungen 109, 109$^I$ sind mit den jeweiligen Polen 134, 134$^I$ bzw. 134$^{II}$, 134$^{III}$ der Akkumulatoren 103, 103', verbunden. Die Messaufnehmerinstallationsreihenfolge 64 gleicht der Aufstellungsreihenfolge 60$^I$. Somit weist auch der zweite Strang 54, dessen Akkumulatoren 103, 103$^I$ als ein Array 84$^I$ angeordnet sind, eine eindeutige Zuordnung von einzelnen Messaufnehmern 107 bzw. 107$^I$ zu einem jeweiligen einzelnen Akkumulator 103 bzw. 103$^I$ auf.

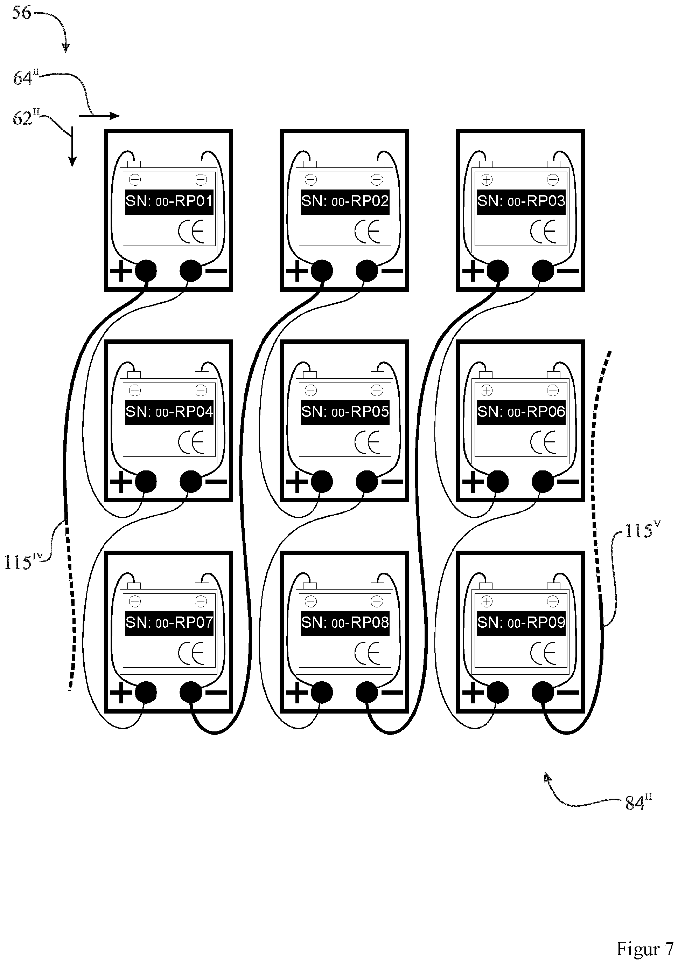

Figur 7 zeigt einen dritten Strang 56, der ähnlich wie die Stränge 52 (in Figur 5) bzw. 54 (in Figur 6) zwischen zwei Energieleitungen 115$^{IV}$, 105$^V$ ausgeführt ist. In der in Figur 7 gezeigten schematischen Ansicht, die eine Ansicht in Draufsicht zeigt, erfolgte eine Messaufnehmerinstallationsreihenfolge 64$^{II}$ zeilenweise und eine Verkabelungsreihenfolge 62$^{II}$ spaltenweise. Das Array 84$^{II}$ gem. Figur 7 ist durch Zusammenstellung von Energiespeicherpaketen, ausgewählt aus einer vorgefertigten Palette, bereitgestellt worden.

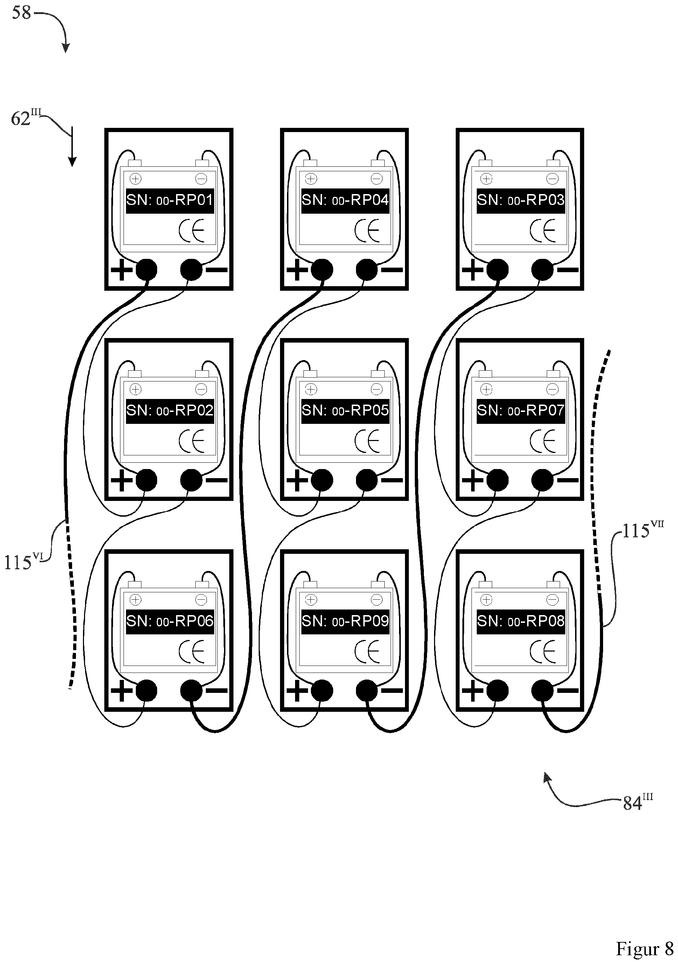

Figur 8 zeigt einen vierten Strang 58 von Akkumulatoren, die - ähnlich wie die Akkumulatoren in Figur 5, in Figur 6 sowie in Figur 7 - durch eine Verkabelungsreihenfolge 62$^{III}$ spaltenweise verkabelt zwischen einem ersten Energieanschluss 115$^{VI}$ und einem zweiten Energieanschluss 115$^{VII}$ realisiert worden sind. Aufgrund des Austauschs verschiedener Akkumulatoren und Messaufnehmer (orientierend sei auf den Akkumulator 103 in Figur 5 sowie auf den Messaufnehmer 107 in Figur 5 verwiesen) sind die individuell identifizierbaren Akkumulatoren und Messeinrichtungen von Figur 8 nicht mit einer systematischen Nummernfolge beschreibbar bzw. angebbar.

Dennoch kann das zuvor beschriebene, automatisierte System die Position von jedem Akkumulator und jeder Messeinrichtung im Schaltungszusammenhang des Arrays 84$^{IV}$ ausfindig machen.

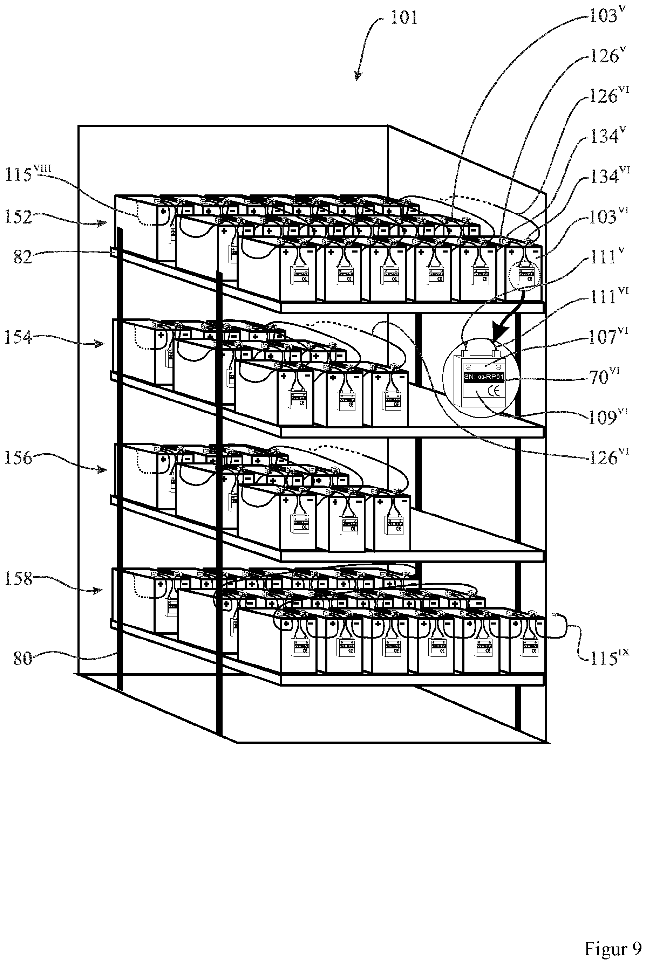

Eine Energieversorgungseinrichtung 101 ist in Figur 9 gezeigt. Bei der Energieversorgungseinrichtung 101 sind in einem Batterieregal 80 auf Regalböden also in Ebenen, wie der Regalebene 82, jeweils ein Batteriestrang 152, 154, 156, 158 angeordnet. Der erste Strang 152 befindet sich auf einem ersten Boden des Batterieregals 82. Eine erste Energieleitung 115$^{VIII}$ führt von außen zu dem ersten Strang 152. Die vier Stränge 152, 154, 156, 158 sind parallel elektrisch miteinander verbunden, wobei eine zweite Energieleitung 115$^{IX}$ am Ende des vierten Strangs nach außen führt. Grundsätzlich sind auch Ausführungsformen mit zumindest teilweise Serienschaltung von zwei oder mehreren Akkumulatoren auf einem Fachboden möglich.

Die Verkabelung in der Energieversorgungseinrichtung 101 (nach Figur 9) wird nur exemplarisch erläutert. Ein vorletztes Energiespeicherpaket 103$^V$ des ersten Strangs 152 ist über einen Energieanschluss 126$^V$ mit einem letzten Energiespeicherpaket 103$^{VI}$ des ersten Strangs 152 verbunden. Von dem Energiespeicherpaket 103$^V$ führt ein Energieanschluss 126$^{VI}$, der unterbrochen eingezeichnet ist, zu dem zweiten Strang 154. Das Energiespeicherpaket 103$^{VI}$ weist zwei Pole 134$^V$, 134$^{VI}$ auf, die gemeinsam über einen jeweiligen Anschluss 111$^V$, 111$^{VI}$ einen Messaufnehmer 107$^{VI}$ tragen, der eine Messeinrichtung 109$^{VI}$ umfasst. Der Messaufnehmer 107$^{VI}$ ist über die Anschlüsse 111$^V$, 111$^{VI}$ sowohl elektrisch als auch in gewichtstragender Weise mit dem Energiespeicherpaket 103$^{VI}$ verbunden bzw. an dessen Pole 134$^V$, 134$^{VI}$ angehängt. Der Messaufnehmer 107$^{VI}$ ist in Figur 9 in einem Kreis vergrößert herausgezeichnet, damit das Messeinrichtungsetikett 70$^{VI}$ besser zu sehen ist. Mit Hilfe des Messeinrichtungsetiketts 70$^{VI}$ kann ein Bediener oder Installateur eine eindeutige Zuordnung des Messaufnehmers 107$^{VI}$ zu dem Energiespeicherpaket 103$^{VI}$ dokumentieren. Die vorgenommene Zuordnung kann so leicht registriert werden. Auf diese Weise lassen sich auch einzelne Energiespeicherpakete, obwohl sich diese in Anordnungen mit zahlreichen anderen Energiespeicherpaketen befinden, gezielt überwachen. In einem Fehlerfall können einzelne, fehlerhafte Energiespeicherpakete oder einzelne fehlerhafte Messaufnehmer mit geringem Aufwand aus der Vielzahl von Komponenten herausgenommen und ersetzt werden.

**Bezugszeichenliste**

| Bezugszeichen | Bedeutung |
|---|---|
| 1, 101 | Energieversorgungseinrichtung |
| 2, $2^I$ | Energieleitungsanschluss, z. B. mit integriertem Wechselrichter bzw. Inverter |
| 3, $3^I$, $3^{II}$, $3^{III}$, $3^{IV}$, 103, $103^I$, $103^{II}$, $103^{III}$, $103^{IV}$, $103^V$, $103^{VI}$ | Energiespeicherpaket, insbesondere Blei-Akkumulator |
| 4 | Überwachungselektronik bzw. Messdatensammler |
| 5 | Empfänger |
| 6 | Messsystem |
| 7, $7^I$, $7^{II}$, $7^{III}$, $7^{IV}$, 107, $107^I$, $107^{VI}$ | Messaufnehmer bzw. Messsensor |
| 8, 8', $8^{II}$, $8^{III}$, $8^{IV}$ | Mikrokontroller, insbesondere mit einer Mikroprozessoreinheit |
| 9, $9^I$, $9^{II}$, $9^{III}$, $9^{IV}$, $9^V$, $9^{VI}$, $9^{VII}$, $9^{VIII}$, $9^{IX}$, 109 , $109^I$, $109^{VI}$ | Messeinrichtung |
| 10, $10^I$, $10^{II}$, $101^{III}$, $10^{IV}$ | Sender |
| 11, $11^I$, $11^{II}$, $11^{III}$, $11^{IV}$, 111, $111^I$, $111^{II}$, $111^{III}$, $111^V$, $111^{VI}$ | Anschluss |
| 12, $12^I$, $12^{II}$, $12^{III}$, $12^{IV}$, 112 | Messpunkt |
| 15, $15^I$, 115, $115^I$, $115^{II}$, $115^{III}$, $115^{IV}$, $115^V$, $115^{VI}$, $115^{VII}$, $115^{VIII}$, $115^{IX}$ | Leitungen, insbesondere Energieleitungen |
| 16, $16^I$, $16^{II}$, $16^{III}$, $16^{IV}$ | Modulator |
| 17 | Demodulator, insbesondere in einem Mikrokontroller |
| 22 | Last, insbesondere ohmsche und induktive Last |
| 23 | Batterieüberwachung |
| 26, $26^I$, 26", $26^{III}$, $26^{IV}$, $26^V$, $26^{VI}$, $26^{VII}$, $26^{VIII}$, $26^{IX}$, 126, $126^I$, $126^{II}$, $126^{III}$, $126^V$, $126^{VI}$ | Energieanschluss |
| 28 | erster Kommunikationskanal |
| 30 | zweiter Kommunikationskanal |
| 32 | dritter Kommunikationskanal |
| 34, $34^I$, 134, $134^I$, $134^{II}$, $134^{III}$, $134^V$, $134^{VI}$ 36 | Pol, insbesondere eines Akkumulators Lichtemitter, insbesondere LED |
| 38 | Empfänger, insbesondere für Lichtsignale |
| 50 | Batterieüberwachungseinrichtung |
| 52, 152 | erster Strang |
| 54, 154 | zweiter Strang |
| 56, 156 | dritter Strang |
| 58, 158 | vierter Strang |
| 60, $60^I$ | Aufstellungsreihenfolge |
| 62, $62^I$, $62^{II}$, $62^{III}$ | Verkabelungsreihenfolge |
| 64, $64^I$, $64^{II}$ | Messaufnehmerinstallationsreihenfolge |
| 66 | Aufstellungsnummer |
| 68 | Akkumulatoretikett, insbesondere Akkumulatoridentifikationsnummer |
| 70, $70^{VI}$ | Messeinrichtungsetikett, insbesondere Messeinrichtungsidentifikationsnummer |
| 80 | Batterieschrank, insbesondere Batterieregal |
| 82 | Regalebene |
| 84, $84^I$, $84^{II}$, $84^{III}$ | Array von Energiespeicherpaketen |
| 151, 251, 351 | Eingabenmaske, insbesondere zur Schaffung einer Sortierschnittstelle |
| 153, 253, 353 | Array-Bezeichnung |

EP 3 715 889 B1

(fortgesetzt)

| Bezugszeichen | Bedeutung |
|---|---|
| 155, 255, 355 | Spaltentitel |
| 157, 257, 357 | Spalte "Anordnung" |
| 159, 259, 359 | Spalte "Sensor-Seriennummer" |
| 161, 261, 361 | Spalte "Strangnummer" |
| 362 | Eingabefeld "Strangnummer" |
| 163, 263, 363 | Spalte "Batterienummer" |
| 364 | Eingabefeld "Batterienummernfolge" |
| 165, 265, 365 | Hauptzuordnungskriterium bzw. ausgewähltes Erkennungsmerkmal |
| 167 | alternatives Erkennungsmerkmal |
| 169, 269, 369 | erster Bedienknopf |
| 171, 271, 371 | zweiter Bedienknopf |
| 173, 273, 373 | dritter Bedienknopf |
| 374 | Schalter für eine manuelle Eingabe |
| 175, 275, 375 | erster Automatisierungsschalter |
| 177, 277, 377 | zweiter Automatisierungsschalter |
| 179, 279, 379 | Sensortabelle |
| 181, 281, 381 | Prüfungsantwort bzw. Antwort auf Prüfanfrage |
| 183, 283, 383 | Strangnummer |
| 185, 285, 385 | Batterienummer |
| 187, 287, 387 | Sensorgesamtzahl des Arrays |
| 189, 289, 389 | Seriennummer |
| 191, 291, 391 | Messzeitpunkt |
| DT | mittleres Messintervall |
| $t_0$ | Anfangszeitpunkt |
| $t$, $t^I$, $t^{II}$, $t^{III}$ | Zeitpunkt |
| $n$, $n^I$ | Messungsnummer, insbesondere Nummer einer Messung zu einem bestimmten Zeitpunkt |
| $\Delta t_0$ | Ungenauigkeit der Bestimmung des Zeitpunkts $t_0$ |
| $\Delta t$ | Ungenauigkeit der Bestimmung des Zeitpunkts $t$, insbesondere Messungenauigkeit der Zeitpunkte $t$ und $t^I$ |

## Patentansprüche

1. Verfahren zur Anpassung einer Zuordnung von Messaufnehmern ($7$, $7^I$, $7^{II}$, $7^{III}$, $7^{IV}$, $107$, $107^I$, $107^{VI}$)

in einem Array ($84$, $84^I$, $84^{II}$, $84^{III}$, $153$, $187$, $253$, $287$)
mit in einzelnen Strängen in Serie verschalteten elektrochemischen Konvertern ($3$, $3^I$, $3^{II}$, $3^{III}$, $3^{IV}$, $103$, $103^I$, $103^{II}$, $103^{III}$, $103^{IV}$, $103^V$, $103^{VI}$),
das an einer zentralisierten Stelle ($1$, $4$, $23$, $38$, $50$) ausführbar ist,
**dadurch gekennzeichnet, dass**
das Verfahren Daten der einzelnen Messaufnehmer ($7$, $7^I$, $7^{II}$, $7^{III}$, $7^{IV}$, $107$, $107^I$, $107^{VI}$), Messdaten ($181$, $281$) und nur einmal vergebene Zusatzinformationen umfassend, an der zentralisierten Stelle ($1$, $4$, $23$, $38$, $50$) zusammenführt,
um an der zentralisierten Stelle ($1$, $4$, $23$, $38$, $50$) eine Entsprechung eines Arrangements der Messaufnehmer ($7$, $7^I$, $7^{II}$, $7^{III}$, $7^{IV}$, $107$, $107^I$, $107^{VI}$) mit einer räumlichen und/oder elektrischen Anordnung ($153$, $157$, $253$, $257$) der zu messenden elektrochemischen Konverter ($3$, $3^I$, $3^{II}$, $3^{III}$, $3^{IV}$, $103$, $103^I$, $103^{II}$, $103^{III}$, $103^{IV}$, $103^V$, $103^{VI}$) herzustellen, wobei wenigstens eines der folgenden Messverfahren durchgeführt wird:

a) strangweise und/oder arrayweise Messung ($191$, $291$, $391$) von Startzeiten aller in einem Strang ($52$, $54$, $56$, $58$, $152$, $154$, $156$, $158$, $161$, $183$, $261$, $283$, $361$, $383$) vorhandenen Messaufnehmer ($7$, $7^I$, $7^{II}$, $7^{III}$, $7^{IV}$, $107$, $107^I$, $107^{VI}$),

b) strangweise und/oder arrayweise Messung (191, 291) von Empfangszeitpunkten aller in einem Strang (52, 54, 56, 58, 152, 154, 156, 158, 161, 183, 261, 283, 361, 383) vorhandenen Messaufnehmer (7, $7^I$, $7^{II}$, $7^{III}$, $7^{IV}$, 107, $107^I$, $107^{VI}$),

c) strangweise und/oder arrayweise Messung (191, 291, 391) von elektrischen Parametern der elektrochemischen Konverter (3, $3^I$, $3^{II}$, $3^{III}$, $3^{IV}$, 103, $103^I$, $103^{II}$, $103^{III}$, $103^{IV}$, $103^V$, $103^{VI}$) und/oder

d) strangweise und/oder arrayweise Messung (191, 291, 391) von Signallaufzeiten,

um anhand der empfangenen Messdaten (181, 281) ein wenigstens zweidimensionales Feld als Abbildung der zu messenden elektrochemischen Konverter (3, $3^I$, $3^{II}$, $3^{III}$, $3^{IV}$, 103, $103^I$, $103^{II}$, $103^{III}$, $103^{IV}$, $103^V$, $103^{VI}$) anzulegen und

die Anpassung der Zuordnung der Messaufnehmer (7, $7^I$, $7^{II}$, $7^{III}$, $7^{IV}$, 107, $107^I$, $107^{VI}$) zu jeweils einem (3, $3^I$, $3^{II}$, $3^{III}$, $3^{IV}$, 103, $103^I$, $103^{II}$, $103^{III}$, $103^{IV}$, $103^V$, $103^{VI}$) oder einer Gruppe von elektrochemischen Konvertern (3, $3^I$, $3^{II}$, $3^{III}$, $3^{IV}$, 103, $103^I$, $103^{II}$, $103^{III}$, $103^{IV}$, $103^V$, $103^{VI}$) in der Abbildung durchzuführen.

2. Verfahren nach Anspruch 1,
**dadurch gekennzeichnet, dass**
e) eine arrayweise Messung (191, 291, 391) von Seriennummern (68, 70, $70^{VI}$, 159, 185 189, 259, 285, 289, 359, 385, 389) und/oder eine strangweise Messung (191, 291, 391) von Seriennummern (70, $70^{VI}$, 189, 289, 389) der Messaufnehmer (7, $7^I$, $7^{II}$, $7^{III}$, $7^{IV}$, 107, $107^I$, $107^{VI}$) durchgeführt wird.

3. Verfahren nach Anspruch 1 oder Anspruch 2,
**dadurch gekennzeichnet, dass**

die Messaufnehmer (7, $7^I$, $7^{II}$, $7^{III}$, $7^{IV}$, 107, 107', $107^{VI}$)
Überwachungsbausteine (4, 8, $8^I$, $8^{II}$, $8^{III}$, $8^{IV}$) oder Messvorrichtungen (6, 9, $9^I$, $9^{II}$, $9^{III}$, $9^{IV}$, $9^V$, $9^{VI}$, $9^{VII}$, $9^{VIII}$, $9^{IX}$, 50, 109, $109^I$, $109^{VI}$) der elektrochemischen Konverter (3, $3^I$, $3^{II}$, $3^{III}$, $3^{IV}$, 103, $103^I$, $103^{II}$, $103^{III}$, $103^{IV}$, $103^V$, $103^{VI}$), vorzugsweise Akkumulatorüberwachungsbausteine (8, $8^I$, $8^{II}$, $8^{III}$, $8^{IV}$) oder Akkumulatormessvorrichtungen (6, 50), insbesondere einzelnen Akkumulatoren zugeordnete Messelektroniken (9, $9^I$, $9^{II}$, $9^{III}$, $9^{IV}$, $9^V$, $9^{VI}$, $9^{VII}$, $9^{VIII}$, $9^{IX}$, 109, $109^I$, $109^{VI}$), oder einer Gruppe von Akkumulatoren (3, $3^I$, $3^{II}$, $3^{III}$, $3^{IV}$, 103, $103^I$, $103^{II}$, $103^{III}$, $103^{IV}$, $103^V$, $103^{VI}$) zugeordnete Messelektroniken (9, $9^I$, $9^{II}$, $9^{III}$, $9^{IV}$, $9^V$, $9^{VI}$, $9^{VII}$, $9^{VIII}$, $9^{IX}$, 109, $109^I$, $109^{VI}$) sind.

4. Verfahren nach einem der Ansprüche 1 bis 3,
**dadurch gekennzeichnet, dass**

die zentralisierte Stelle (1, 4, 23, 38, 50)
ein Messdatensammler (4), ein Empfänger (5, 38), eine Zentrale (1, 50) oder ein Steuerungsrechner, vorzugsweise
ein als übergeordneter Steuerungsrechner platzierter Knoten, ist.

5. Verfahren nach einem der vorhergehenden Ansprüche,
**dadurch gekennzeichnet, dass**

die Messaufnehmer (7, $7^I$, $7^{II}$, $7^{III}$, $7^{IV}$, 107, $107^I$, $107^{VI}$)
zur Messung einer Spannung, einer Temperatur, eines Stroms, einer Konzentration und/oder eines Widerstands, vorzugsweise eines Innenwiderstands, des elektrochemischen Konverters (3, $3^I$, $3^{II}$, $3^{III}$, $3^{IV}$, 103, $103^I$, $103^{II}$, $103^{III}$, $103^{IV}$, $103^V$, $103^{VI}$), vorzugsweise eines Akkumulators (3, $3^I$, $3^{II}$, $3^{III}$, $3^{IV}$, 103, $103^I$, $103^{II}$, $103^{III}$, $103^{IV}$, $103^V$, $103^{VI}$), oder einer Gruppe von elektrochemischen Konvertern, besonders bevorzugt einer Gruppe von Akkumulatoren (3, $3^I$, $3^{II}$, $3^{III}$, $3^{IV}$, 103, $103^I$, $103^{II}$, $103^{III}$, $103^{IV}$, $103^V$, $103^{VI}$), dienen.

6. Verfahren nach Anspruch 2 oder einem der von Anspruch 2 abhängigen Ansprüche 3-5,
**dadurch gekennzeichnet, dass**
alle fünf Messverfahren a), b), c), d) und e) durchgeführt werden.

7. Verfahren nach einem der vorhergehenden Ansprüche,
**dadurch gekennzeichnet, dass**
eine strangweise Messung durch ein strangweises Hinzuschalten der elektrochemischen Konverter (3, $3^I$, $3^{II}$, $3^{III}$, $3^{IV}$, 103, $103^I$, $103^{II}$, $103^{III}$, $103^{IV}$, $103^V$, $103^{VI}$) des Strangs (52, 54, 56, 58, 152, 154, 156, 158, 161, 183, 261, 283, 361, 383) erfolgt.

8. Verfahren nach einem der vorhergehenden Ansprüche,
**dadurch gekennzeichnet, dass**
eine Abbildung einer Aufeinanderfolge der in dem Array (84, $84^I$, $84^{II}$, $84^{III}$, 153, 187, 253, 287) zusammengeschlossenen elektrochemischen Konverter (3, $3^I$, $3^{II}$, $3^{III}$, $3^{IV}$, 103, $103^I$, $103^{II}$, $103^{III}$, $103^{IV}$, $103^V$, $103^{VI}$) anhand von für jeden einzelnen elektrochemischen Konverter (3, $3^I$, $3^{II}$, $3^{III}$, $3^{IV}$, 103, $103^I$, $103^{II}$, $103^{III}$, $103^{IV}$, $103^V$, $103^{VI}$) einzigartigen Erkennungsmerkmalen, vorzugsweise Seriennummern (68, 70, $70^{VI}$, 159, 185, 189, 259, 285, 289, 359, 385, 389), Datenempfangszeitpunkte oder Datenempfangszeiträume, Datensendezeitpunkte oder Datensendezeiträume, geschaffen wird.

9. Verfahren nach Anspruch 8,
**dadurch gekennzeichnet, dass**
anhand einer Messzeit oder eines Messzeitpunktes (191, 291, 391) das Erkennungsmerkmal in die Zuordnung einsortiert wird,
insbesondere die Stelle in der Zuordnung aufgrund einer zeitlichen Komponente beeinflusst wird.

10. Verfahren nach einem der vorhergehenden Ansprüche,
**dadurch gekennzeichnet, dass**
das Verfahren einen Verfahrensschritt aufweist,
der eine Sortierschnittstelle (151, 251) für eine kontrollierte Umänderung der Zuordnung durch einen Benutzer einer Messanordnung (6, 50) umfasst.

11. Verfahren nach einem der vorhergehenden Ansprüche,
**dadurch gekennzeichnet, dass**
in einem weiteren, vorzugsweise letzten, Verfahrensschritt die Zuordnung auf Plausibilität, Richtigkeit und Schlüssigkeit geprüft wird,
wobei vorzugsweise ein weiterer Abgleichschritt mit einer über ein Eingabefeld eines Terminalprogramms in der Messanordnung (5, 50) hinterlegten Montagereihenfolge der elektrochemischen Konverter (3, $3^I$, $3^{II}$, $3^{III}$, $3^{IV}$, 103, $103^I$, $103^{II}$, $103^{III}$, $103^{IV}$, $103^V$, $103^{VI}$) und/oder der Messaufnehmer (7, $7^I$, $7^{II}$, $7^{III}$, $7^{IV}$, 107, $107^I$, $107^{VI}$) durchgeführt wird und insbesondere das Prüfungsergebnis zusätzlich markiert, gespeichert und optional archiviert wird.

12. Messanordnung (6, 50)
mit elektrochemischen Konvertern (3, $3^I$, $3^{II}$, $3^{III}$, $3^{IV}$, 103, $103^I$, $103^{II}$, $103^{III}$, $103^{IV}$, $103^V$, $103^{VI}$), die in einem Array (84, $84^I$, $84^{II}$, $84^{III}$, 153, 187, 253, 287) in mehreren Strängen (52, 54, 56, 58, 152, 154, 156, 158, 161, 183, 261, 283, 361, 383) in Serie miteinander verschaltet sind und
von denen wenigstens einige mit jeweils einem Messaufnehmer (7, $7^I$, $7^{II}$, $7^{III}$, $7^{IV}$, 107, $107^I$, $107^{VI}$) ausgestattet sind,
wobei jeder Messaufnehmer (7, $7^I$, $7^{II}$, $7^{III}$, $7^{IV}$, 107, $107^I$, $107^{VI}$) wenigstens ein einzigartiges Erkennungsmerkmal, wie eine eindeutige Seriennummer, hat,
und wobei die Messanordnung (6, 50) einen zentralen Messdatensammler (4) hat, in dem ein Speicher für ein Zusammenführen von Daten (181, 281) vorhanden ist, wobei in der Messanordnung (6, 50) ein Messverfahren mithilfe der einzigartigen Erkennungsmerkmale der Messaufnehmer (7, $7^I$, $7^{II}$, $7^{III}$, $7^{IV}$, 107, $107^I$, $107^{VI}$) durchgeführt wird,
**dadurch gekennzeichnet, dass**
die Messanordnung (6, 50) für ein Verfahren nach einem der Ansprüche 1 bis 11 gestaltet ist, wobei
zwei Automatisierungsschalter (175, 275, 375, 177, 277, 377) in einer Eingabemaske (151, 251, 351) vorhanden sind, über die bestimmbar ist, ob die Messanordnung (6, 50) Strangnummernangaben und insbesondere Batterienummernangaben abarbeitet,
damit zur Bestimmung eines Arrangements der elektrochemischen Konverter (3, $3^I$, $3^{II}$, $3^{III}$, $3^{IV}$, 103, $103^I$, $103^{II}$, $103^{III}$, $103^{IV}$, $103^V$, $103^{VI}$) jeder Messaufnehmer (7, $7^I$, $7^{II}$, $7^{III}$, $7^{IV}$, 107, $107^I$, $107^{VI}$) unter Nutzung des einzigartigen Erkennungsmerkmals zu einem ihm eigenen Zeitpunkt zur Übertragung an den zentralen Messdatensammler (4) über einen Kommunikationskanal (28, 30, 32) zwischen Messaufnehmer (7, $7^I$, $7^{II}$, $7^{III}$, $7^{IV}$, 107, 107$^I$, 107$^{VI}$) und Messdatensammler (4) gestaltet ist,
wodurch eine Zuordnung der Messaufnehmer (7, 7$^I$, 7$^{II}$, 7$^{III}$, 7$^{IV}$, 107, 107$^I$, 107$^{VI}$) zu den einzelnen Strängen (52, 54, 56, 58, 152, 154, 156, 158, 161, 183, 261, 283, 361, 383), die in den Speicher des Messdatensammlers (4) eingeschrieben wird, strangweise nach und nach erweitert wird.

**13.** Messanordnung (6, 50) nach Anspruch 12,
**dadurch gekennzeichnet, dass**
der Messaufnehmer (7, 7$^I$, 7$^{II}$, 7$^{III}$, 7$^{IV}$, 107, 107$^I$, 107$^{VI}$) über eine Schnittstelle an den Messdatensammler (4) angebunden ist.

**14.** Messanordnung (6, 50) nach einem der Ansprüche 12 oder 13,
**dadurch gekennzeichnet, dass**

in der Messanordnung (6, 50) alle elektrochemischen Konverter (3, 3$^I$, 3$^{II}$, 3$^{III}$, 3$^{IV}$, 103, 103$^I$, 103$^{II}$, 103$^{III}$, 103$^{IV}$, 103$^V$, 103$^{VI}$) mit jeweils einem Messaufnehmer (7, 7$^I$, 7$^{II}$, 7$^{III}$, 7$^{IV}$, 107, 107$^I$, 107$^{VI}$) ausgestattet, insbesondere fest verbunden, sind und
insbesondere jedem einzelnen elektrochemischen Konverter (3, 3$^I$, 3$^{II}$, 3$^{III}$, 3$^{IV}$, 103, 103', 103$^{II}$, 103$^{III}$, 103$^{IV}$, 103$^V$, 103$^{VI}$), wobei vorzugsweise die elektrochemischen Konverter (3, 3$^I$, 3$^{II}$, 3$^{III}$, 3$^{IV}$, 103, 103$^I$, 103$^{II}$, 103$^{III}$, 103$^{IV}$, 103$^V$, 103$^{VI}$) Akkumulatoren sind, eine Messelektronik (9, 9$^I$, 9$^{II}$, 9$^{III}$, 9$^{IV}$, 9$^V$, 9$^{VI}$, 9$^{VII}$, 9$^{VIII}$, 9$^{IX}$, 109, 109$^I$, 109$^{VI}$) zugeordnet ist.

### Claims

**1.** Method for adjusting an assignment of sensors (7, 7$^I$, 7$^{II}$, 7$^{III}$, 7$^{IV}$, 107, 107$^I$, 107$^{VI}$) in an array (84, 84$^I$, 84$^{II}$, 84$^{III}$, 153, 187, 253, 287) comprising electrochemical converters (3, 3$^I$, 3$^{II}$, 3$^{III}$, 3$^{IV}$, 103, 103$^I$, 103$^{II}$, 103$^{III}$, 103$^{IV}$, 103$^V$, 103$^{VI}$) connected in series in individual strings, which method can be executed at a centralized location (1, 4, 23, 38, 50),
**characterized in that**

the method brings together, at the centralized location (1, 4, 23, 38, 50), data from the individual sensors (7, 7$^I$, 7$^{II}$, 7$^{III}$, 7$^{IV}$, 107, 107$^I$, 107$^{VI}$), measurement data (181, 281), and unique additional information, in order to establish, at the centralized location (1, 4, 23, 38, 50), a correspondence between an arrangement of the sensors (7, 7$^I$, 7$^{II}$, 7$^{III}$, 7$^{IV}$, 107, 107$^I$, 107$^{VI}$) and a spatial and/or electrical arrangement (153, 157, 253, 257) of the electrochemical converters (3, 3$^I$, 3$^{II}$, 3$^{III}$, 3$^{IV}$, 103, 103$^I$, 103$^{II}$, 103$^{III}$, 103$^{IV}$, 103$^V$, 103$^{VI}$) to be measured, wherein at least one of the following measuring processes is carried out:

a) measuring (191, 291, 391), in a string-by-string and/or array-by-array manner, start times of all the sensors (7, 7$^I$, 7$^{II}$, 7$^{III}$, 7$^{IV}$, 107, 107$^I$, 107$^{VI}$) present in a string (52, 54, 56, 58, 152, 154, 156, 158, 161, 183, 261, 283, 361, 383),
b) measuring (191, 291), in a string-by-string and/or array-by-array manner, reception times of all the sensors (7, 7$^I$, 7$^{II}$, 7$^{III}$, 7$^{IV}$, 107, 107$^I$, 107$^{VI}$) present in a string (52, 54, 56, 58, 152, 154, 156, 158, 161, 183, 261, 283, 361, 383),
c) measuring (191, 291, 391), in a string-by-string and/or array-by-array manner, electrical parameters of the electrochemical converters (3, 3$^I$, 3$^{II}$, 3$^{III}$, 3$^{IV}$, 103, 103$^I$, 103$^{II}$, 103$^{III}$, 103$^{IV}$, 103$^V$, 103$^{VI}$), and/or
d) measuring (191, 291), in a string-by-string and/or array-by-array manner, signal transit times,

in order to create, on the basis of the received measurement data (181, 281), an at least two-dimensional field as a representation of the electrochemical converters (3, 3$^I$, 3$^{II}$, 3$^{III}$, 3$^{IV}$, 103, 103$^I$, 103$^{II}$, 103$^{III}$, 103$^{IV}$, 103$^V$, 103$^{VI}$) to be measured, and
adjusting the assignment of the sensors (7, 7$^I$, 7$^{II}$, 7$^{III}$, 7$^{IV}$, 107, 107$^I$, 107$^{VI}$) to in each case one (3, 3$^I$, 3$^{II}$, 3$^{III}$, 3$^{IV}$, 103, 103$^I$, 103$^{II}$, 103$^{III}$, 103$^{IV}$, 103$^V$, 103$^{VI}$) or a group of electrochemical converters (3, 3$^I$, 3$^{II}$, 3$^{III}$, 3$^{IV}$, 103, 103$^I$, 103$^{II}$, 103$^{III}$, 103$^{IV}$, 103$^V$, 103$^{VI}$) in the representation.

**2.** Method according to claim 1,
**characterized in that**
e) an array-by-array measurement (191, 291, 391) of serial numbers (68, 70, 70$^{VI}$, 159, 185, 189, 259, 285, 289, 359, 385, 389) and/or a string-by-string measurement (191, 291, 391) of serial numbers (70, 70$^{VI}$, 189, 289, 389) of the sensors (7, $7^I$, $7^{II}$, $7^{III}$, $7^{IV}$, 107, $107^I$, $107^{VI}$) is carried out.

3.  Method according to claim 1 or claim 2,
    **characterized in that**
    the sensors (7, $7^I$, $7^{II}$, $7^{III}$, $7^{IV}$, 107, $107^I$, $107^{VI}$) are monitoring modules (4, 8, $8^I$, $8^{II}$, $8^{III}$, $8^{IV}$) or measuring devices (6, 9, $9^I$, $9^{II}$, $9^{III}$, $9^{IV}$, $9^V$, $9^{VI}$, $9^{VII}$, $9^{VIII}$, $9^{IX}$, 50, 109, $109^I$, $109^{VI}$) of the electrochemical converters (3, $3^I$, $3^{II}$, $3^{III}$, $3^{IV}$, 103, $103^I$, $103^{II}$, $103^{III}$, $103^{IV}$, $103^V$, $103^{VI}$), preferably battery monitoring modules (8, $8^I$, $8^{II}$, $8^{III}$, $8^{IV}$) or battery measuring devices (6, 50), in particular measuring electronics (9, $9^I$, $9^{II}$, $9^{III}$, $9^{IV}$, $9^V$, $9^{VI}$, $9^{VII}$, $9^{VIII}$, $9^{IX}$, 109, $109^I$, $109^{VI}$) assigned to individual batteries, or measuring electronics (9, $9^I$, $9^{II}$, $9^{III}$, $9^{IV}$, $9^V$, $9^{VI}$, $9^{VII}$, $9^{VIII}$, $9^{IX}$, 109, $109^I$, $109^{VI}$) assigned to a group of batteries (3, $3^I$, $3^{II}$, $3^{III}$, $3^{IV}$, 103, $103^I$, $103^{II}$, $103^{III}$, $103^{IV}$, $103^V$, $103^{VI}$).

4.  Method according to any one of claims 1 to 3,
    **characterized in that**
    the centralized location (1, 4, 23, 38, 50) is a measurement data collector (4), a receiver (5, 38), a control center (1, 50) or a control computer, preferably a node placed as a higher-level control computer.

5.  Method according to any one of the preceding claims,
    **characterized in that**
    the sensors (7, $7^I$, $7^{II}$, $7^{III}$, $7^{IV}$, 107, $107^I$, $107^{VI}$) serve to measure a voltage, a temperature, a current, a concentration and/or a resistance, preferably an internal resistance, of the electrochemical converter (3, $3^I$, $3^{II}$, $3^{III}$, $3^{IV}$, 103, $103^I$, $103^{II}$, $103^{III}$, $103^{IV}$, $103^V$, $103^{VI}$), preferably of a battery (3, $3^I$, $3^{II}$, $3^{III}$, $3^{IV}$, 103, $103^I$, $103^{II}$, $103^{III}$, $103^{IV}$, $103^V$, $103^{VI}$), or of a group of electrochemical converters, particularly preferably of a group of batteries (3, $3^I$, $3^{II}$, $3^{III}$, $3^{IV}$, 103, $103^I$, $103^{II}$, $103^{III}$, $103^{IV}$, $103^V$, $103^{VI}$).

6.  Method according to claim 2 or any one of claims 3-5 dependent on claim 2,
    **characterized in that**
    all five measuring processes a), b), c), d) and e) are carried out.

7.  Method according to any one of the preceding claims,
    **characterized in that**
    a string-by-string measurement is carried out by switching the electrochemical converters (3, $3^I$, $3^{II}$, $3^{III}$, $3^{IV}$, 103, $103^I$, $103^{II}$, $103^{III}$, $103^{IV}$, $103^V$, $103^{VI}$) of the string (52, 54, 56, 58, 152, 154, 156, 158, 161, 183, 261, 283, 361, 383) in a string-by-string add-on manner.

8.  Method according to any one of the preceding claims,
    **characterized in that**
    a representation of a sequence of the electrochemical converters (3, $3^I$, $3^{II}$, $3^{III}$, $3^{IV}$, 103, $103^I$, $103^{II}$, $103^{III}$, $103^{IV}$, $103^V$, $103^{VI}$) brought together in the array (84, $84^I$, $84^{II}$, $84^{III}$, 153, 187, 253, 287) is created on the basis of identifying features which are unique to each individual electrochemical converter (3, $3^I$, $3^{II}$, $3^{III}$, $3^{IV}$, 103, $103^I$, $103^{II}$, $103^{III}$, $103^{IV}$, $103^V$, $103^{VI}$), preferably serial numbers (68, 70, $70^{VI}$, 159, 185, 189, 259, 285, 289, 359, 385, 389), data reception times or data reception periods, data transmission times or data transmission periods.

9.  Method according to claim 8,
    **characterized in that**
    the identifying feature is sorted into the assignment on the basis of a measurement time or a measurement moment (191, 291, 391), in particular the location in the assignment is influenced by a temporal component.

10. Method according to any one of the preceding claims,
    **characterized in that**
    the method includes a method step which comprises a sorting interface (151, 251) for a controlled changing of the assignment by a user of a measuring arrangement (6, 50).

11. Method according to any one of the preceding claims,
    **characterized in that**
    in a further, preferably last, method step, the assignment is checked for plausibility, correctness and conclusiveness, wherein preferably a further step of comparison against an installation order of the electrochemical converters (3, $3^I$, $3^{II}$, $3^{III}$, $3^{IV}$, 103, $103^I$, $103^{II}$, $103^{III}$, $103^{IV}$, $103^V$, $103^{VI}$) and/or of the sensors (7, $7^I$, $7^{II}$, $7^{III}$, $7^{IV}$, 107, $107^I$, $107^{VI}$), which is stored in the measuring arrangement (5, 50) via an input field of a terminal program, is carried out, and in particular the result of the check is additionally labeled, stored, and optionally archived.

12. Measuring arrangement (6, 50) comprising electrochemical converters (3, 3$^I$, 3$^{II}$, 3$^{III}$, 3$^{IV}$, 103, 103$^I$, 103$^{II}$, 103$^{III}$, 103$^{IV}$, 103$^V$, 103$^{VI}$) which are connected in series with each other in multiple strings (52, 54, 56, 58, 152, 154, 156, 158, 161, 183, 261, 283, 361, 383) in an array (84, 84$^I$, 84$^{II}$, 84$^{III}$, 153, 187, 253, 287), and at least some of which are equipped with a respective sensor (7, 7$^I$, 7$^{II}$, 7$^{III}$, 7$^{IV}$, 107, 107$^I$, 107$^{VI}$), wherein each sensor (7, 7$^I$, 7$^{II}$, 7$^{III}$, 7$^{IV}$, 107, 107$^I$, 107$^{VI}$) has at least one unique identifying feature, such as a unique serial number, and wherein the measuring arrangement (6, 50) has a central measurement data collector (4) in which a memory for bringing together data (181, 281) is provided, wherein, in the measuring arrangement (6, 50), a measuring method is carried out using the unique identifying features of the sensors (7, 7$^I$, 7$^{II}$, 7$^{III}$, 7$^{IV}$, 107, 107$^I$, 107$^{VI}$),
    **characterized in that**
    the measuring arrangement (6, 50) is designed for a method according to any one of claims 1 to 11, wherein two automation switches (175, 275, 375, 177, 277, 377) are provided in an input mask (151, 251, 351), via which it can be determined whether the measuring arrangement (6, 50) is processing string number information and in particular battery number information, so that, using the unique identifying feature, each sensor (7, 7$^I$, 7$^{II}$, 7$^{III}$, 7$^{IV}$, 107, 107$^I$, 107$^{VI}$) is designed to transmit to the central measurement data collector (4), via a communication channel (28, 30, 32) between the sensor (7, 7$^I$, 7$^{II}$, 7$^{III}$, 7$^{IV}$, 107, 107$^I$, 107$^{VI}$) and the measurement data collector (4), at a dedicated time in order to determine an arrangement of the electrochemical converters (3, 3$^I$, 3$^{II}$, 3$^{III}$, 3$^{IV}$, 103, 103$^I$, 103$^{II}$, 103$^{III}$, 103$^{IV}$, 103$^V$, 103$^{VI}$), as a result of which an assignment of the sensors (7, 7$^I$, 7$^{II}$, 7$^{III}$, 7$^{IV}$, 107, 107$^I$, 107$^{VI}$) to the individual strings (52, 54, 56, 58, 152, 154, 156, 158, 161, 183, 261, 283, 361, 383), the assignment being written to the memory of the measurement data collector (4), is gradually expanded in a string-by-string manner.

13. Measuring arrangement (6, 50) according to claim 12,
    **characterized in that**
    the sensor (7, 7$^I$, 7$^{II}$, 7$^{III}$, 7$^{IV}$, 107, 107$^I$, 107$^{VI}$) is connected to the measurement data collector (4) via an interface.

14. Measuring arrangement (6, 50) according to any one of claims 12 or 13,
    **characterized in that**
    in the measuring arrangement (6, 50), all the electrochemical converters (3, 3$^I$, 3$^{II}$, 3$^{III}$, 3$^{IV}$, 103, 103$^I$, 103$^{II}$, 103$^{III}$, 103$^{IV}$, 103$^V$, 103$^{VI}$) are equipped with, in particular permanently connected to, a respective sensor (7, 7$^I$, 7$^{II}$, 7$^{III}$, 7$^{IV}$, 107, 107$^I$, 107$^{VI}$), and in particular measuring electronics (9, 9$^I$, 9$^{II}$, 9$^{III}$, 9$^{IV}$, 9$^V$, 9$^{VI}$, 9$^{VII}$, 9$^{VIII}$, 9$^{IX}$, 109, 109$^I$, 109$^{VI}$) are assigned to each individual electrochemical converter (3, 3$^I$, 3$^{II}$, 3$^{III}$, 3$^{IV}$, 103, 103$^I$, 103$^{II}$, 103$^{III}$, 103$^{IV}$, 103$^V$, 103$^{VI}$), wherein preferably the electrochemical converters (3, 3$^I$, 3$^{II}$, 3$^{III}$, 3$^{IV}$, 103, 103$^I$, 103$^{II}$, 103$^{III}$, 103$^{IV}$, 103$^V$, 103$^{VI}$) are batteries.

**Revendications**

1. Procédé destiné à ajuster une attribution de capteurs de mesure (7, 7$^I$, 7$^{II}$ 7$^{III}$, 7$^{IV}$, 107, 107$^I$, 107$^{VI}$)

    dans un réseau (84, 84$^I$, 84$^{II}$ 84$^{III}$ 153, 187, 253, 287)
    avec des convertisseurs électrochimiques (3, 3$^I$, 3$^{II}$, 3$^{III}$, 3$^{IV}$, 103, 103$^I$, 103$^{II}$, 103$^{III}$, 103$^{IV}$, 103$^V$, 103$^{VI}$) reliés en série dans des chaînes individuelles,
    qui peut être exécuté en un emplacement centralisé (1, 4, 23, 38, 50),
    **caractérisé en ce que**
    le procédé rassemble des données des capteurs de mesure (7, 7$^I$, 7$^{II}$ 7$^{III}$, 7$^{IV}$, 107, 107$^I$, 107$^{VI}$) individuels comprenant des données de mesure (181, 281) et des informations supplémentaires fournies uniquement une fois, au niveau de l'emplacement centralisé (1, 4, 23, 38, 50),
    pour établir au niveau de l'emplacement centralisé (1, 4, 23, 38, 50) une correspondance d'un arrangement des capteurs de mesure (7, 7$^I$, 7$^{II}$ 7$^{III}$, 7$^{IV}$, 107, 107$^I$, 107$^{VI}$) avec un agencement (153, 157, 253, 257) spatial et/ou électrique des convertisseurs électrochimiques (3, 3', 3", 3$^{III}$, 3$^{IV}$, 103, 103$^I$, 103$^{II}$ 103$^{III}$, 103$^{IV}$, 103$^V$, 103$^{VI}$) à mesurer, dans lequel au moins l'un des procédés de mesure suivants est réalisé :

        a) mesure par chaîne et/ou par réseau (191, 291, 391) d'heures de départ de tous les capteurs de mesure (7, 7$^I$, 7", 7$^{III}$, 7$^{IV}$, 107, 107$^I$, 107$^{VI}$) présents dans une chaîne (52, 54, 56, 58, 152, 154, 156, 158, 161, 183, 261, 283, 361, 383),
        b) mesure par chaîne et/ou par réseau (191, 291) de moments de réception de tous les capteurs de mesure (7, 7$^I$, 7$^{II}$ 7$^{III}$, 7$^{IV}$, 107, 107$^I$, 107$^{VI}$) présents dans une chaîne (52, 54, 56, 58, 152, 154, 156, 158, 161, 183, 261, 283, 361, 383),

    c) mesure par chaîne et/ou par réseau (191, 291, 391) de paramètres électriques des convertisseurs électrochimiques (3, 3', 3", $3^{III}$, $3^{IV}$, 103, 103', 103", $103^{III}$, $103^{IV}$, $103^{V}$, $103^{VI}$) et/ou

    d) mesure par chaîne et/ou par réseau (191, 291, 391) de temps de propagation de signal,

pour à l'aide des données de mesure (181, 281) reçues créer un champ au moins bidimensionnel en tant que représentation des convertisseurs électrochimiques (3, $3^{I}$, $3^{II}$, $3^{III}$, $3^{IV}$, 103, $103^{I}$, $103^{II}$, $103^{III}$, $103^{IV}$, $103^{V}$, $103^{VI}$) à mesurer et

réaliser l'ajustement dans la représentation de l'attribution des capteurs de mesure (7, $7^{I}$, $7^{II}$, $7^{III}$, $7^{IV}$, 107, $107^{I}$, $107^{VI}$) à respectivement un (3, $3^{I}$, $3^{II}$, $3^{III}$, $3^{IV}$, 103, $103^{I}$, $103^{II}$, $103^{III}$, $103^{IV}$, $103^{V}$, $103^{VI}$) ou un groupe de convertisseurs électrochimiques (3, $3^{I}$, $3^{II}$, $3^{III}$, $3^{IV}$, 103, $103^{I}$, $103^{II}$, $103^{III}$, $103^{IV}$, $103^{V}$, $103^{VI}$).

2.   Procédé selon la revendication 1,
    **caractérisé en ce que**
    e) une mesure par réseau (191, 291, 391) de numéros de série (68, 70, $70^{VI}$, 159, 185, 189, 259, 285, 289, 359, 385, 389) et/ou une mesure par chaîne (191, 291, 391) de numéros de série (70, $70^{VI}$, 189, 289, 389) des capteurs de mesure (7, $7^{I}$, $7^{II}$, $7^{III}$, $7^{IV}$, 107, $107^{I}$, $107^{VI}$) est réalisée.

3.   Procédé selon la revendication 1 ou la revendication 2,
    **caractérisé en ce que**
    les capteurs de mesure (7, $7^{I}$, $7^{II}$ $7^{III}$, $7^{IV}$, 107, $107^{I}$, $107^{VI}$) sont des blocs de surveillance (4, 8, $8^{I}$, $8^{II}$, $8^{III}$, $8^{IV}$) ou des dispositifs de mesure (6, 9, $9^{I}$, $9^{II}$, $9^{III}$, $9^{IV}$, $9^{V}$, $9^{VI}$, $9^{VII}$, $9^{VIII}$, $9^{IX}$, 50, 109, $109^{I}$, $109^{VI}$) des convertisseurs électrochimiques (3, $3^{I}$, $3^{II}$, $3^{III}$, $3^{IV}$, 103, $103^{I}$, $103^{II}$, $103^{III}$, $103^{IV}$, $103^{V}$, $103^{VI}$), de préférence des blocs de surveillance d'accumulateur (8, $8^{I}$, $8^{II}$, $8^{III}$, $8^{IV}$) ou des dispositifs de mesure d'accumulateur (6, 50), en particulier des électroniques de mesure (9, $9^{I}$, $9^{II}$, $9^{III}$, $9^{IV}$, $9^{V}$, $9^{VI}$, $9^{VII}$, $9^{VIII}$, $9^{IX}$, 109, $109^{I}$, $109^{VI}$) attribuées à des accumulateurs individuels, ou des électroniques de mesure (9, 9', $9^{II}$, $9^{III}$, $9^{IV}$, $9^{V}$, $9^{VI}$, $9^{VII}$, $9^{VIII}$, $9^{IX}$, 109, $109^{I}$, $109^{VI}$) attribuées à un groupe d'accumulateurs (3, $3^{I}$, $3^{II}$, $3^{III}$, $3^{IV}$, 103, $103^{I}$, $103^{II}$, $103^{III}$, $103^{IV}$, $103^{V}$, $103^{VI}$).

4.   Procédé selon l'une des revendications 1 à 3,
    **caractérisé en ce que**

l'emplacement centralisé (1, 4, 23, 38, 50)
est un collecteur de données de mesure (4), un récepteur (5, 38), une centrale (1, 50) ou un calculateur de commande, de préférence un noeud placé en tant que calculateur de commande hiérarchiquement supérieur.

5.   Procédé selon l'une des revendications précédentes,
    **caractérisé en ce que**

les capteurs de mesure (7, $7^{I}$, $7^{II}$ $7^{III}$, $7^{IV}$, 107, $107^{I}$, $107^{VI}$) servent
à la mesure d'une tension, d'une température, d'un courant, d'une concentration et/ou d'une résistance, de préférence d'une résistance interne, du convertisseur électrochimique (3, 3', $3^{II}$, $3^{III}$, $3^{IV}$, 103, 103', 103", $103^{III}$, $103^{IV}$, $103^{V}$, $103^{VI}$), de préférence d'un accumulateur (3, 3', 3", $3^{III}$, $3^{IV}$, 103, 103', 103", $103^{III}$, $103^{IV}$, $103^{V}$, $103^{VI}$), ou d'un groupe de convertisseurs électrochimiques, de manière particulièrement préférée d'un groupe d'accumulateurs (3, $3^{I}$, $3^{II}$, $3^{III}$, $3^{IV}$, 103, $103^{I}$, $103^{II}$, $103^{III}$, $103^{IV}$, $103^{V}$, $103^{VI}$).

6.   Procédé selon la revendication 2 ou l'une des revendications 3-5 dépendantes de la revendication 2,
    **caractérisé en ce que**
    l'ensemble des cinq procédés de mesure a), b), c), d) et e) sont réalisés.

7.   Procédé selon l'une des revendications précédentes,
    **caractérisé en ce que**
    une mesure par chaîne s'effectue par le raccordement supplémentaire à la chaîne des convertisseurs électrochimiques (3, $3^{I}$, $3^{II}$, $3^{III}$, $3^{IV}$, 103, $103^{I}$, $103^{II}$, $103^{III}$, $103^{IV}$, $103^{V}$, $103^{VI}$) de la chaîne (52, 54, 56, 58, 152, 154, 156, 158, 161, 183, 261, 283, 361, 383).

8.   Procédé selon l'une des revendications précédentes,
    **caractérisé en ce que**

une représentation d'une succession des convertisseurs électrochimiques (3, $3^I$, $3^{II}$, $3^{III}$, $3^{IV}$, 103, $103^I$, $103^{II}$, $103^{III}$, $103^{IV}$, $103^V$, $103^{VI}$) raccordés ensemble dans le réseau (84, $84^I$, $84^{II}$, $84^{III}$, 153, 187, 253, 287) est produite à l'aide de caractéristiques de reconnaissance uniques à chaque convertisseur électrochimique (3, 3', $3^{II}$, $3^{III}$, $3^{IV}$, 103, 103', 103", $103^{III}$, $103^{IV}$, $103^V$, $103^{VI}$), de préférence des numéros de série (68, 70, $70^{VI}$, 159, 185, 189, 259, 285, 289, 359, 385, 389), des moments de réception de données ou des périodes de réception de données, des moments d'envoi de données ou des périodes d'envoi de données.

9. Procédé selon la revendication 8,
   **caractérisé en ce que**

   à l'aide d'un temps de mesure ou d'un moment de mesure (191, 291, 391), la caractéristique de reconnaissance est classée dans l'attribution,
   en particulier l'emplacement dans l'attribution est influencé en raison d'une composante temporelle.

10. Procédé selon l'une des revendications précédentes,
    **caractérisé en ce que**

    le procédé présente une étape de procédé,
    qui comprend une interface de tri (151, 251) pour une modification contrôlée de l'attribution par un utilisateur d'un agencement de mesure (6, 50).

11. Procédé selon l'une des revendications précédentes,
    **caractérisé en ce que**

    dans une autre, de préférence dernière, étape de procédé, l'attribution est vérifiée quant à la vraisemblance, à la justesse et à la cohérence,
    dans lequel de préférence une autre étape d'équilibrage est réalisée avec un ordre de montage des convertisseurs électrochimiques (3, $3^I$, $3^{II}$, $3^{III}$, $3^{IV}$, 103, $103^I$, $103^{II}$, $103^{III}$, $103^{IV}$, $103^V$, $103^{VI}$) et/ou des capteurs de mesure (7, $7^I$, $7^{II}$, $7^{III}$, $7^{IV}$, 107, $107^I$, $107^{VI}$) enregistré dans l'agencement de mesure (5, 50) via un champ de saisie d'un programme de terminal, et en particulier le résultat de vérification est en complément marqué, mémorisé et optionnellement archivé.

12. Agencement de mesure (6, 50)

    avec des convertisseurs électrochimiques (3, $3^I$, $3^{II}$, $3^{III}$, $3^{IV}$, 103, $103^I$, $103^{II}$, $103^{III}$, $103^{IV}$, $103^V$, $103^{VI}$) qui sont reliés ensemble en série dans plusieurs chaînes (52, 54, 56, 58, 152, 154, 156, 158, 161, 183, 261, 283, 361, 383) dans un réseau (84, $84^I$, $84^{II}$, $84^{III}$, 153, 187, 253, 287) et
    dont au moins quelques-uns d'entre eux sont respectivement équipés d'un capteur de mesure (7, $7^I$, $7^{II}$ $7^{III}$, $7^{IV}$, 107, $107^I$, $107^{VI}$),
    dans lequel chaque capteur de mesure (7, $7^I$, $7^{II}$, $7^{III}$, $7^{IV}$, 107, $107^I$, $107^{VI}$) a au moins une caractéristique de reconnaissance unique, tel un numéro de série explicite,
    et dans lequel l'agencement de mesure (6, 50) a un collecteur de données de mesure (4) central dans lequel se trouve une mémoire pour un rassemblement de données (181, 281),
    dans lequel dans l'agencement de mesure (6, 50) un procédé de mesure est réalisé à l'aide des caractéristiques de reconnaissance uniques des capteurs de mesure (7, $7^I$, $7^{II}$ $7^{III}$, $7^{IV}$, 107, $107^I$, $107^{VI}$),
    **caractérisé en ce que**
    l'agencement de mesure (6, 50) est conçu pour un procédé selon l'une des revendications 1 à 11, dans lequel deux commutateurs d'automatisation (175, 275, 375, 177, 277, 377) sont présents dans un masque de saisie (151, 251, 351) via lesquels il peut être déterminé si l'agencement de mesure (6, 50) traite des indications de numéros de chaîne et en particulier des indications de numéros de batterie, afin que, pour la détermination d'un arrangement des convertisseurs électrochimiques (3, $3^I$, $3^{II}$, $3^{III}$, $3^{IV}$, 103, $103^I$, $10^{II}$, $103^{III}$, $103^{IV}$, $103^V$, $103^{VI}$), chaque capteur de mesure (7, $7^I$, $7^{II}$, $7^{III}$, $7^{IV}$, 107, $107^I$, $107^{VI}$) soit conçu, en utilisant la caractéristique de reconnaissance unique à un moment qui lui est propre, pour une transmission vers le collecteur de données de mesure (4) central via un canal de communication (28, 30, 32) entre le capteur de mesure (7, $7^I$, $7^{II}$ $7^{III}$, $7^{IV}$, 107, $107^I$, $107^{VI}$) et le collecteur de données de mesure (4),
    moyennant quoi une attribution des capteurs de mesure (7, $7^I$, $7^{II}$, $7^{III}$, $7^{IV}$, 107, $107^I$, $107^{VI}$) aux chaînes (52, 54, 56, 58, 152, 154, 156, 158, 161, 183, 261, 283, 361, 383), individuelles, qui est inscrite dans la mémoire du collecteur de données de mesure (4), est encore élargie chaîne après chaîne.

**13.** Agencement de mesure (6, 50) selon la revendication 12,
**caractérisé en ce que**
le capteur de mesure (7, 7$^I$, 7$^{II}$, 7$^{III}$, 7$^{IV}$, 107, 107$^I$, 107$^{VI}$) est relié au collecteur de données de mesure (4) via une interface.

**14.** Agencement de mesure (6, 50) selon l'une des revendications 12 ou 13,
**caractérisé en ce que**

dans l'agencement de mesure (6, 50), tous les convertisseurs électrochimiques (3, 3', 3$^{II}$, 3$^{III}$, 3$^{IV}$, 103, 103$^I$, 103$^{II}$, 103$^{III}$, 103$^{IV}$, 103$^V$, 103$^{VI}$) sont respectivement équipés, en particulier solidement reliés, d'un capteur de mesure (7, 7$^I$, 7$^{II}$ 7$^{III}$, 7$^{IV}$, 107, 107$^I$, 107$^{VI}$) et
en particulier à chaque convertisseur électrochimique (3, 3$^I$, 3$^{II}$, 3$^{III}$, 3$^{IV}$, 103, 103$^I$, 103$^{II}$, 103$^{III}$, 103$^{IV}$, 103$^V$, 103$^{VI}$) individuel, dans lequel de préférence les convertisseurs électrochimiques (3, 3$^I$, 3$^{II}$, 3$^{III}$, 3$^{IV}$, 103, 103$^I$, 103$^{II}$, 103$^{III}$, 103$^{IV}$, 103$^V$, 103$^{VI}$) sont des accumulateurs, est attribuée une électronique de mesure (9, 9$^I$, 9$^{II}$, 9$^{III}$, 9$^{IV}$, 9$^V$, 9$^{VI}$, 9$^{VII}$, 9$^{VIII}$, 9$^{IX}$, 109, 109$^I$, 109$^{VI}$).

Figur 1

**Batterieanordnung**

| Anordnung | Sensor-Seriennummer | Strang-nummer | Batterie-nummer |
|---|---|---|---|

Nach Startzeit ↑ ✓
Nach Empfangszeitpunkt
Nach Seriennummer
...

Reset  Reset

Alle füllen

☑Auto  ☐Auto

**Sensor-Startzeit:** (5 Sensoren)

| 1 | 2018-10-11 10:58:12 ± 0.014s | YY-201W | 1 ▾ | 1 ▾ ✓ |
| 2 | 2018-10-11 10:59:00 ± 0.014s | YY-201X | 1 ▾ | 2 ▾ ✓ |
| 3 | 2018-10-11 10:59:17 ± 0.014s | YY-201V | 1 ▾ | 3 ▾ ✓ |
| 4 | 2018-10-11 10:59:48 ± 0.014s | YY-201U | 1 ▾ | 4 ▾ ✓ |
| 5 | 2018-10-11 11:00:29 ± 0.014s | YY-201R | 1 ▾ | 5 ▾ ✓ |

Figur 2

| Anordnung | Sensor-Seriennummer | Strang-nummer | Batterie-nummer |
|---|---|---|---|
| Nach Startzeit ↑  ☑ | | Reset | Reset |
| | | | Alle füllen |
| | | ☑Auto | ☐Auto |

**Sensor-Startzeit** (80 Sensoren)

| | | | | |
|---|---|---|---|---|
| 1 | 2018-10-11 09:14:49 ± 0.032s | YY-201J | 1 ▾ | 1 ▾ ✓ |
| 2 | 2018-10-11 09:16:26 ± 0.032s | YY-201L | 1 ▾ | 2 ▾ ✓ |
| 3 | 2018-10-11 19:16:34 ± 0.032s | YY-200P | 1 ▾ | 3 ▾ ✓ |
| 4 | 2018-10-11 09:20:14 ± 0.032s | YY-201H | 1 ▾ | 4 ▾ ✓ |
| 5 | 2018-10-11 09:24:54 ± 0.032s | YY-201T | 1 ▾ | 5 ▾ ✓ |

⋮

| 77 | 2018-10-11 09:25:48 ± 0.032s | YY-201N | 2 ▾ | 77 ▾ ✓ |
| 78 | 2018-10-11 09:31:54 ± 0.032s | YY-2028 | 2 ▾ | 78 ▾ ✓ |
| 79 | 2018-10-11 09:33:29 ± 0.032s | YY-2026 | 2 ▾ | 79 ▾ ✓ |
| 80 | 2018-10-11 09:34:56 ± 0.032s | YY-201C | 2 ▾ | 80 ▾ ✓ |

⊞ Batterieanordnung

Figur 3

Figur 4

Figur 5

Figur 6

56

64$^{II}$

62$^{II}$

SN: 00-RP01 CE
SN: 00-RP02 CE
SN: 00-RP03 CE

SN: 00-RP04 CE
SN: 00-RP05 CE
SN: 00-RP06 CE

115$^{IV}$

115$^{V}$

SN: 00-RP07 CE
SN: 00-RP08 CE
SN: 00-RP09 CE

84$^{II}$

Figur 7

Figur 8

Figur 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2770605 B1
- EP 2911269 B1
- US 8884585 B2
- US 10230246 B2
- US 2012175953 A1
- US 9296348 B2
- WO 2012043592 A1
- JP 2014041747 A
- US 2014365792 A1
- EP 2840643 A1